# EUROPEAN PATENT APPLICATION

(11) **EP 1 777 979 A1**
(43) Date of publication of application: **25.04.2007**
(21) Application number: 05781352.9
(22) Date of filing: 01.09.2005
(51) Int. Cl.: H04Q 7/38, H04Q 7/22, H04B 7/26

(54) **MOBILE STATION APPARATUS AND UPSTREAM LINE TRANSMISSION RATE CONTROL METHOD**

(30) Priority: 13.09.2004 JP 2004266025
(71) Applicant: MATSUSHITA ELECTRIC INDUSTRIAL CO., LTD., Osaka 571-8501 (JP)
(72) Inventor: KAYAMA, Hidenori, Matsushita Elect. Industrial Co,Ltd., Chuo-ku, Osaka 540-6319 (JP); DUAN, Jinsong, Matsushita Elect. Industrial Co,Ltd., Chuo-ku, Osaka 540-6319 (JP)
(74) Representative: Grünecker, Kinkeldey, Stockmair & Schwanhäusser Anwaltssozietät
(86) International application number: PCT/JP2005/016034
(87) International publication number: WO 2006/030647

(57) **Abstract**

A mobile station apparatus selects an appropriate one of transmission rate instruction commands received from base station apparatuses to reduce the interference of the whole system and improve the sector throughput. In this mobile station apparatus (200), a demodulating section (210) outputs a received signal of each base station apparatus to an error correction decoding section (220), which then outputs the ACK/NACK and instruction command of each base station apparatus to a transmission rate control section (240), which then selects, based on the ACK/NACK information, from among the instruction commands received from the base station apparatuses, the instruction command that should be employed on a priority basis during an actual transmission rate control and that is received from a base station apparatus having a highest priority.

## Description

### Technical Field

The present invention relates to a mobile station apparatus and uplink communication rate control method, and particularly to a mobile station apparatus and uplink communication rate control method for executing a soft handover during movement between cells.

### Background Art

In recent years, HSUPA (High Speed Uplink Packet Access) has been considered as a transmission standard for increasing the speed of packet transfers of uplink channels in W-CDMA (Wideband-Code Division Multiple Access). In HSUPA, an E-DCH (Enhanced-Dedicated CHannel) is provided as a channel dedicated to transferring uplink channel packets.

The power assigned to the E-DCH constitutes part of the receiving power of a base station apparatus in addition to thermal noise power, other-cell interference power, and the power of individual channels used in voice communications and other communications. In other words, E-DCH can be assigned power that excludes three types of power, i.e., thermal noise power, other-cell interference power, and individual channel power, as part of the maximum receiving power that can be received by the base station apparatus.

FIG. 1 shows the breakdown of receiving power in a base station apparatus cited in non-patent document 1, for example. The maximum receiving power that can be received in the base station apparatus is determined for each base station apparatus as an RoT threshold (RoT (Rise Over Thermal) threshold), as shown in the diagram, and the receiving power in the base station apparatus includes thermal noise power 10, other-cell interference power 20, and individual channel receiving power 30 from n number of mobile station apparatuses belonging to the same cell in a range that does not exceed the RoT threshold. The remaining receiving power excluding these powers from the RoT threshold is the E-DCH receiving power 40 that can be assigned to E-DCH.

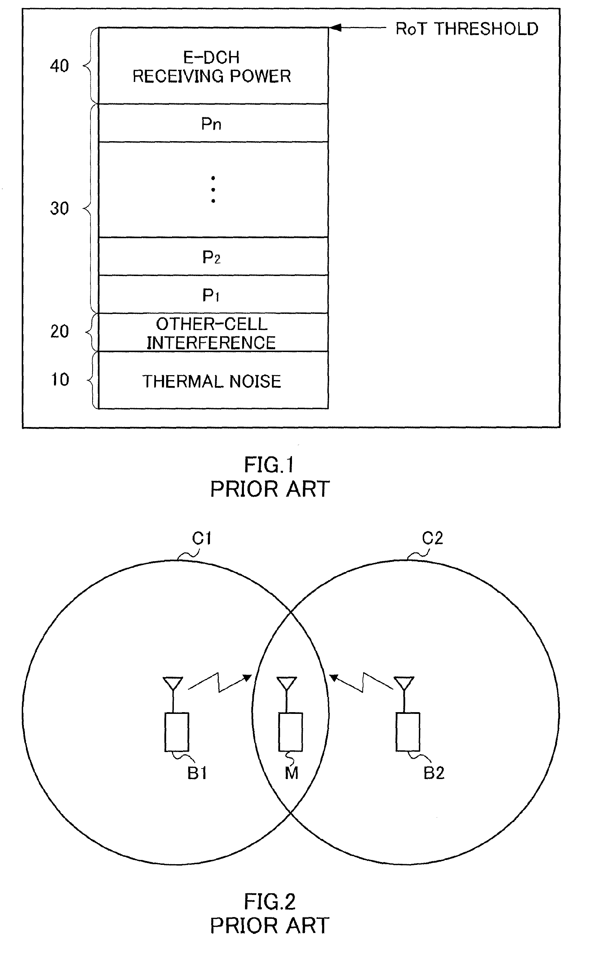

Since a plurality of mobile station apparatuses belong to the cells covered by the base station apparatus, E-DCH receiving power 40 must be assigned with good efficiency to these mobile station apparatuses to perform uplink channel packet communication. In other words, in FIG. 1, E-DCH receiving power 40 needs to be distributed to the mobile station apparatuses that perform high-speed packet transfers among a plurality of the mobile station apparatuses belonging to the same cell. Non-patent document 1 describes scheduling that is carried out by the base station apparatus in order to distribute E-DCH receiving power 40 with good efficiency to each mobile station apparatus.

In scheduling, the base station apparatus distributes the receiving power of the base station apparatus that can be assigned to E-DCH to each mobile station apparatus in its own cell. The base station apparatus may send to the mobile station apparatuses instruction commands to increase or decrease the communication rate so that the distributed receiving power for each mobile station apparatus can be achieved. Specifically, when the base station apparatus assigns a considerable amount of receiving power than the current level to a mobile station apparatus, the base station apparatus sends an "Up" instruction command to the mobile station apparatus to cause the mobile station apparatus to increase the communication rate. When the base station apparatus assigns the same amount of receiving power as the current level, the base station sends a "Keep" instruction command to the mobile station apparatus to cause the mobile station apparatus to maintain the communication rate. When the base station apparatus assigns a lower amount of receiving power than the current level, the base station sends a "Down" instruction command to themobile station apparatus to cause the mobile station apparatus to lower the communication rate.
Non-patent Document 1: 3GPP TR 25.896 V6.0.0 (2004-03)

### Disclosure of Invention

### Problems to Be Solved by the Invention

However, when a mobile station apparatus moves between cells covered by base station apparatuses, a soft handover is performed and communication may be carried out among a plurality of base station apparatuses. Specifically, when a mobile station apparatus M is positioned near the border between cells C1 and C2, mobile station apparatus M communicates with both base station apparatus B1, which covers cell C1, and base station apparatus B2, which covers cell C2, as shown in FIG. 2. At this point, mobile station apparatus M receives communication rate instruction commands from both base station apparatuses B1 and B2 when the above-described scheduling is performed. In this case, the content of the instruction commands sent by base station apparatuses B1 and B2 may be contradictory depending on the difference between the propagation environments in each of the cells. In a mobile station apparatus which has received instruction commands containing contradictory contents, there is a problem in that the communication rate cannot be suitably controlled, leading to an increase in interference with other mobile station apparatuses in the cell as a result, and to other problems as well.

An object of the present invention is to provide a mobile station apparatus and uplink communication rate control method that can select an appropriate instruction command from a plurality of instruction commands of communication rates transmitted from the base station apparatus, reduce interference in the entire system, and improve the sector throughput.

### Means for Solving the Problem

The mobile station apparatus of the present invention employs a structure comprising a receiving section for receiving from a plurality of base station apparatuses receipt confirmation responses to uplink signals, and instruction commands that instruct an increase, maintenance, or reduction of a communication rate; and a control section for controlling the communication rate on the basis of at least one option selected from a received plurality of receipt confirmation responses and a plurality of instruction commands.

The mobile station apparatus of the present invention employs a structure in which the control section comprises a selecting section for selecting an instruction command having a maximum priority level among the plurality of instruction commands, using the plurality of receipt confirmation response; and a determining section for determining a transmission rate to be used in actual transmissions from a communication rate that is in accordance with the instruction command of the selected instruction command.

The base station apparatus of the present invention employs a structure that comprises a receiving section for receiving signals transmitted from a mobile station apparatus; a generating section for generating instruction commands that instruct a communication rate to the mobile station apparatus on the basis of the received signal; a calculating section for calculating the receiving power that can be received by the base station apparatus, from the communication rate instructed to the mobile station apparatus; and a transmitting section for transmitting generated instruction commands and calculated receiving power.

The uplink communication rate control method of the present invention comprises a step for receiving from a plurality of base station apparatuses instruction commands that instruct the communication rate to be increased, maintained, or reduced and receipt confirmation responses to signals of the uplink; a step for selecting an instruction command having the highest priority among the received plurality of instruction commands, using the received plurality of receipt confirmation responses; and a step for determining the transmission rate used in actual transmissions, from the communication rate that is in accordance with the selected instruction command.

### Advantageous Effect of the Invention

According to the present invention, appropriate instruction commands can be selected from a plurality of communication rate instruction commands transmitted frombase station apparatuses, interference in the entire system can be reduced, and the sector throughput can be improved.

### Brief Description of Drawings

FIG. 1 is a diagram showing an example of a breakdown of the receiving power in a mobile station apparatus;
FIG.2 is a diagram showing an example of a mobile communication system;
FIG. 3 is a block diagram showing the constituent elements of the base station apparatus of Embodiment 1 of the present invention;
FIG. 4 is a block diagram showing the constituent elements of the mobile station apparatus of Embodiment 1;
FIG. 5 is a block diagram showing the internal configuration of the communication rate control section of Embodiment 1;
FIG. 6 is a flowchart showing the communication rate control operation of Embodiment 1;
FIG. 7 is a diagram showing an example of the ACK/NACK history of Embodiment 1;
FIG. 8 is a flowchart showing the rate increase/decrease determination process of Embodiment 1;
FIG. 9 is a block diagram showing the internal configuration of the communication rate control section of Embodiment 2 of the present invention;
FIG. 10 is a flowchart showing the communication rate control operation of Embodiment 2;
FIG. 11 is a diagram showing an example of the ACK/NACK history of Embodiment 2;
FIG. 12 is a block diagram showing the internal configuration of the communication rate control section of Embodiment 3;
FIG. 13 is a flowchart showing the communication rate control operation of Embodiment 3;
FIG. 14 is a diagram showing an example of the ACK/NACK history of Embodiment 3;
FIG. 15 is a block diagram showing the internal configuration of the communication rate control section of Embodiment 4 of the present invention;
FIG. 16 is a flowchart showing the communication rate control operation of Embodiment 4;
FIG. 17 is a block diagram showing the constituent elements of the base station apparatus of Embodiment 5 of the present invention;
FIG. 18 is a diagram showing an example of a breakdown of the receiving power in the base station apparatus of Embodiment 5;
FIG. 19 is a block diagram showing the internal configuration of the communication rate control section of Embodiment 5; and
FIG. 20 is a flowchart showing the communication rate control section of Embodiment 5.

### Best Mode for Carrying Out the Invention

The present inventors observed that HARQ (Hybrid Automatic Repeat request) is effective in the same manner as HSDPA (High Speed Downlink Packet Access) as repeat control for an uplink in HSUPA. The present inventors furthermore observed that with HARQ in HUSPA, a base station apparatus returns ACK/NACK's, which are receipt confirmation responses for packets transferred via the uplink, to a mobile station apparatus.

The present inventors contrived the present invention having found that ACK/NACK's returned from the base station apparatus to the mobile station apparatus are direct indicators of the uplink packet transmission quality, and also having found that packet retransmissions can be reduced by controlling the communication rate in accordance with an instruction command from a base station apparatus that has good uplink packet transmission quality.

Embodiments of the present invention are described in detail below with reference to the diagrams.

### (Embodiment 1)

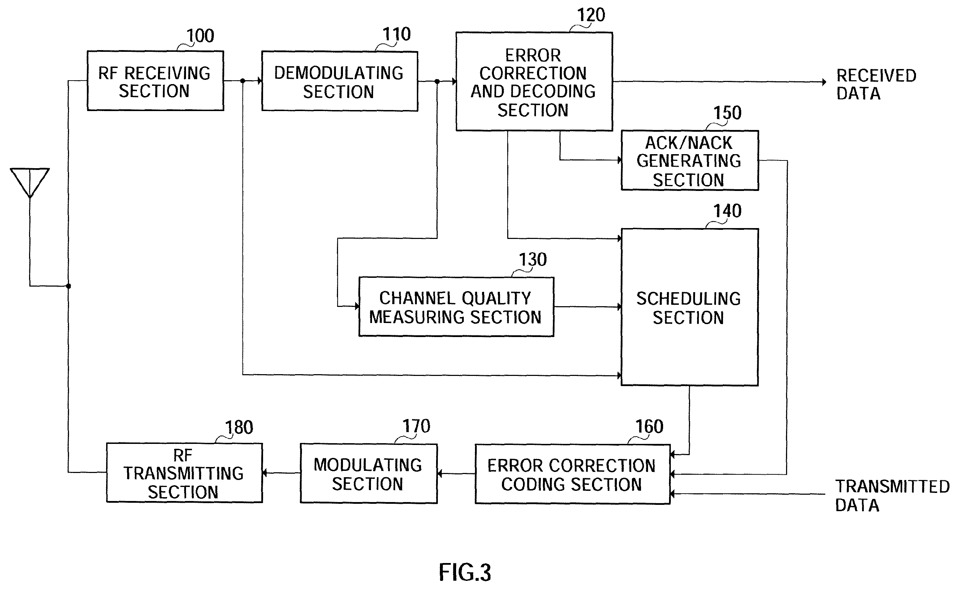

FIG. 3 is a block diagram showing the constituent elements of the base station apparatus of Embodiment 1 of the present invention. As shown in the diagram, the base station apparatus of the present embodiment has RF (Radio Frequency) receiving section 100, a demodulating section 110, error correction and decoding section 120, channel quality measuring section 130, scheduling section 140, ACK/NACK generating section 150, error correction coding section 160, modulating section 170, and RF transmitting section 180.

RF receiving section 100 receives uplink packets sent from a mobile station apparatus and carries out prescribed radio receiving processing (down conversion, A/D conversion, and the like) on the received packets. RF receiving section 100 outputs to scheduling section 140 receiving power information related to the total receiving power of the entire received signal, which includes the received packet.

Demodulating section 110 demodulates and outputs received packets to error correction and decoding section 120 and channel quality measuring section 130.

Error correction and decoding section 120 performs error detection and error correction on the demodulated received packet using, for example, CRC (Cyclic Redundancy Check) and convolutional code; outputs received data from the received packets after correction; outputs transmission requests contained in received data to scheduling section 140; and outputs the error detection results to ACK/NACK generating section 150. A transmission request is information for requesting transmission of packets through an uplink and is transmitted from the mobile station apparatuses to the base station apparatus in accordance with , e.g., the amount of transmission data or the like stored in the mobile station apparatuses. The transmission request may include information or the like related to the communication rate desired by the mobile station apparatuses, for example.

Channel quality measuring section 130 uses received packets after demodulation to measure the uplink channel quality, e.g., SIR (Signal-to-Interference Ratio).

Scheduling section 140 determines the receiving power of the base station apparatus that has been assigned to packets from the mobile station apparatuses on the basis of the receiving power information output from RF receiving section 100, the transmission request output from error correction and decoding section 120, and the channel quality measured by channel quality measuring section 130, and generates a communication rate instruction command for each mobile station apparatus corresponding to the receiving power assigned to each of the mobile station apparatuses.

Specifically, scheduling section 140 calculates from the receiving power information and channel quality a breakdown of the total receiving power, i.e., the thermal noise power, other-cell interference power, individual channel receiving power excluding that used for packet communication, and receiving power of the packet communication channel (E-DCH). The receiving power that can be assigned to E-DCH is then distributed to the mobile station apparatuses. At this point, scheduling section 140, for example, determines whether the communication rate needs to be reduced due to the channel quality with the mobile station apparatus, or whether the communication rate needs to be reduced so that the receiving power of the entire received signal does not exceed the RoT threshold determined in advance, even if a transmission request is received from a mobile station apparatus indicating the desire to maintain the current communication rate. The scheduling section 140 then generates a "Down" instruction command that causes the communication rate to be reduced in accordance with the results of the determination. In the same manner, the scheduling section 140 generates a "Keep" instruction command that causes the communication rate to be maintained and an "Up" instruction command that causes the communication rate to be increased for the mobile station apparatuses.

ACK/NACK generating section 150 generates an ACK or a NACK, which are receipt confirmation responses, in accordance with error detection result output from error correction and decoding section 120. Specifically, ACK/NACK generating section 150 generates an ACK if there is no error in the received data and generates a NACK if there is an error in the received data.

Error correction coding section 160 performs error correction coding on the transmission signals obtained by mapping the transmitted data, instruction command, and ACK/NACK, using, for example, a CRC code and convolutional code.

Modulating section 170 modulates the transmission signal after error correction coding and outputs the result to RF transmitting section 180.

RF transmitting section 180 carries out prescribed radio transmission processing (D/A conversion, up conversion, and the like) on signals to be transmitted, and transmits the signals to the mobile station apparatuses via an antenna.

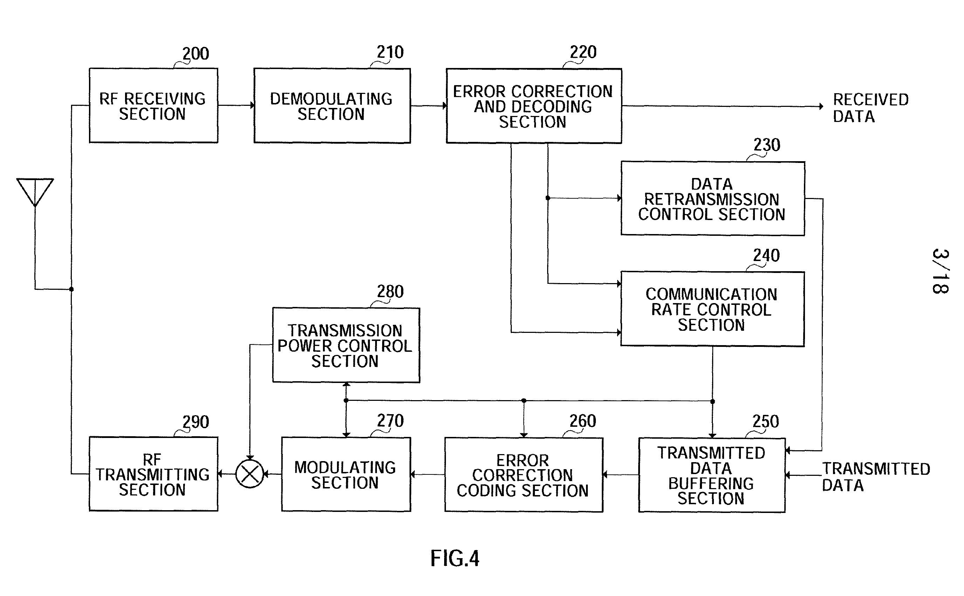

FIG. 4 is a block diagram showing the constituent elements of the mobile station apparatus of Embodiment 1. As shown in the diagram, the mobile station apparatus of the present embodiment has an RF receiving section 200, a demodulating section 210, an error correction and decoding section 220, a data retransmission control section 230, a communication rate control section 240, a transmitted data buffering section 250, an error correction coding section 260, a modulating section 270, a transmission power control section 280, and an RF transmitting section 290.

RF receiving section 200 receives signals transmitted from a base station apparatus and carries out prescribed radio receiving processing (down conversion, A/D conversion, and the like) on received signals. RF receiving section 200 receives signals transmitted from a plurality of base station apparatuses when the mobile station apparatus undergoes soft handover.

Demodulating section 210 demodulates and outputs the received signal to error correction and decoding section 220. Demodulating section 210 outputs to error correction and decoding section 220 the received signals of each base station apparatus that correspond to a plurality of base station apparatuses when the mobile station apparatus undergoes soft handover.

Error correction and decoding section 220 performs error correction and error detection on the received signal after the demodulation using, for example, CRC and convolutional code; outputs received data from the received packets after correction; outputs instruction commands related to the communication rate contained in the received data to communication rate control section 240; and outputs the ACK/NACK contained in the received data to data retransmission control section 230 and communication rate control section 240. Error correction and decoding section 220 outputs to communication rate control section 240 the ACK/NACK and instruction commands of each base station apparatus that corresponds to a plurality of base station apparatuses when the mobile station apparatus undergoes soft handover.

Data retransmission control section 230 determines whether to retransmit a packet in accordance with the ACK/NACK output from error correction and decoding section 220, and notifies transmitted data buffering section 250 of the existence of a retransmission. Specifically, when an ACK is output from error correction and decoding section 220, data retransmission control section 230 notifies transmitted data buffering section 250 that the packet transmitted from the mobile station apparatus was transferred to the base station apparatus without an error and the next packet will be transmitted. On the other hand, when only a NACK is output from error correction and decoding section 220, data retransmission control section 230 notifies transmitted data buffering section 250 that the packet transmitted from the mobile station apparatus was erroneously transferred to all of the base station apparatuses and that the packet will be retransmitted.

Communication rate control section 240 determines from the instruction command the communication rate of the uplink packets, and outputs the rate to transmitted data buffering section 250, error correction coding section 260, modulating section 270, and transmission power control section 280. When a mobile station apparatus undergoes soft handoff, communication rate control section 240 selects, on the basis of the ACK/NACK information, from among the instruction commands transmitted from the base station apparatuses, the instruction command that should be adopted with priority when the communication rate is actually controlled and that was transmitted from the base station apparatus having the highest priority. The internal configuration and operation of communication rate control section 240 is described later.

Transmitted data buffering section 250 temporarily stores transmitted data and outputs the transmitted data to error correction coding section 260. Transmitted data buffering section 250 discards stored transmitted data when notified that the next packet will be transmitted from data retransmission control section 230, and outputs stored transmitted data to error correction coding section 260 when notified that a packet will be retransmitted. Transmitted data buffering section 250 controls the amount of transmitted data to error correction coding section 260 in accordance with the communication rate instructed by communication rate control section 240.

Error correction coding section 260 performs error correction coding on the transmission data output from transmitted data buffering section 250 using, for example, a CRC code and convolutional code. Error correction coding section 260 converts the encoding rate in accordance with the communication rate instructed by communication rate control section 240. Specifically, error correction coding section 260 increases the encoding rate when the communication rate is increased, and reduces the encoding rate when the communication rate is reduced.

Modulating section 270 modulates the transmission data after error correction coding and outputs the result to RF transmitting section 290. Modulating section 270 modifies the modulation method in accordance with the communication rate instructed by communication rate control section 240. Specifically, modulating section 270 uses a modulation method having a large modulation multi-value number when the communication rate is increased, and uses a modulation method having a small modulation multi-value number when the communication rate is reduced.

Transmission power control section 280 determines the transmission power that corresponds to the communication rate, which is determined by communication rate control section 240, and controls the transmission power of the transmitted data.

RF transmitting section 290 carries out prescribed radio transmission processing (D/Aconversion, up conversion, and the like) on transmitted signals in which transmission power has been controlled, and transmits the result to the base station apparatus via an antenna.

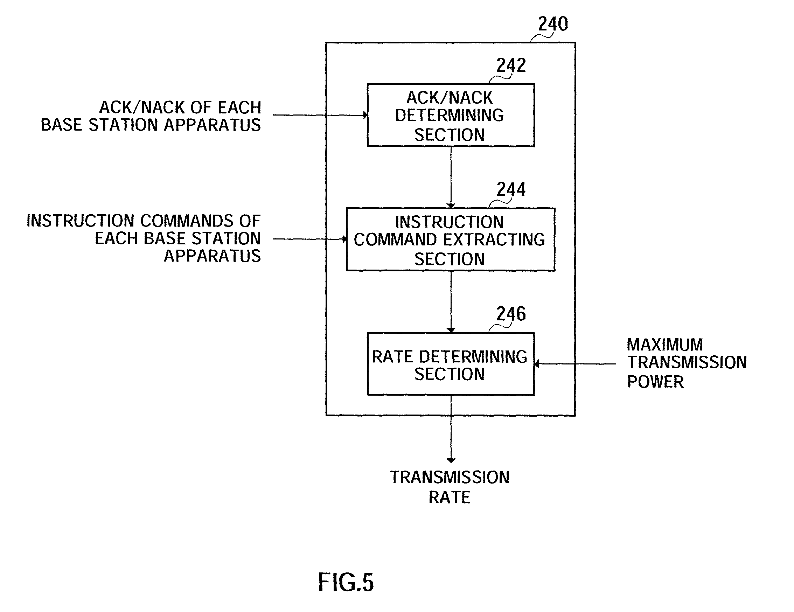

The internal configuration of communication rate control section 240 of the mobile station apparatus of the present embodiment is described next with reference to FIG. 5.

Communication rate control section 240 has ACK/NACK determining section 242, instruction command extracting section 244, and rate determining section 246, as shown in FIG. 5. ACK/NACK determining section 242, instruction command extracting section 244, and rate determining section 246 mainly operate when the mobile station apparatus undergoes a soft handover (i.e., when signals are received from a plurality of base station apparatuses).

ACK/NACK determining section 242 determines whether an ACK or a NACK has been transmitted from the corresponding base station apparatuses in relation to the ACK/NACK of each base station apparatus output from error correction and decoding section 220. At this point, ACK/NACK determining section 242 determines the most recently received ACK/NACK. In this manner, an ACK/NACK can be reliably used as an indicator of the propagation environment of the most recent uplink by judging the newest ACK/NACK, even when the processing timing of the data retransmission control and communication rate control, for example, is offset.

ACK/NACK determining section 242 determines that the packet transmission quality is good in the uplink in relation to base station apparatus that transmitted an ACK, the base station apparatus that transmitted an ACK is set to the highest priority level, and instruction command extracting section 244 is instructed to extract the instruction command of this base station apparatus.

Instruction command extracting section 244 extracts, from among the instruction commands of each base station apparatus, the instruction command of the base station apparatus for which extraction has been instructed, and outputs the result to rate determining section 246.

Rate determining section 246 determines from the content of the plurality of instruction commands whether to increase, maintain, or reduce the communication rate when there is a plurality of instruction commands extracted by instruction command extracting section 244. Rate determining section 246 determines whether the transmitting power corresponding to the communication rate determined from the content of the plurality of instruction commands exceeds the maximum transmitting power that can be transmitted from the mobile station apparatus, and decides on the ultimate transmission rate.

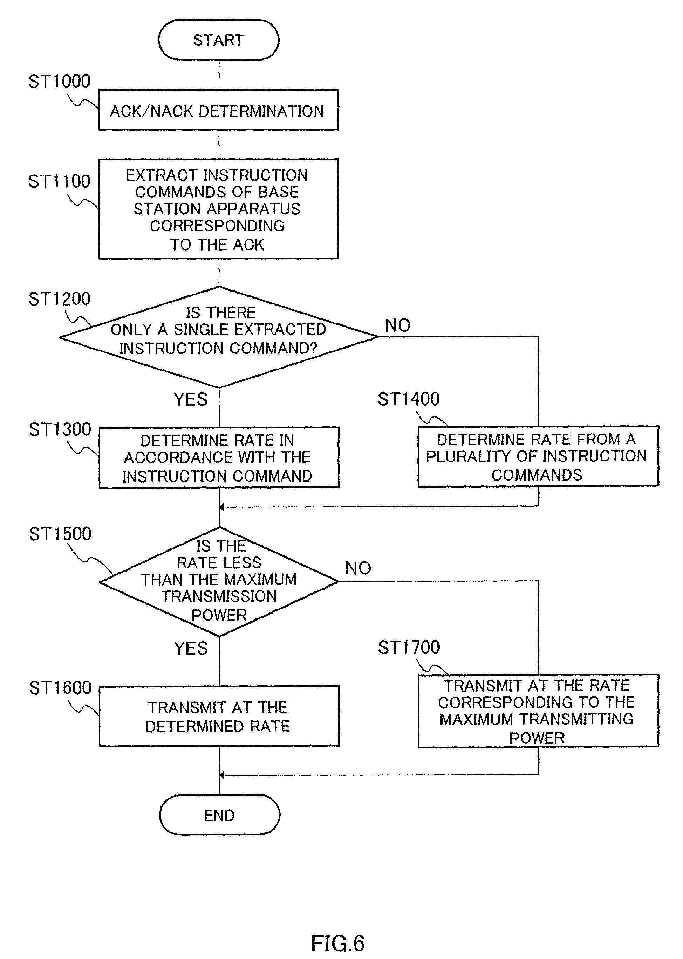

The operation of determining the communication rate when a mobile station apparatus configured in the manner described above undergoes soft handover is described next in detail with reference to FIGS. 6 to 8.

Described first is the operation that occurs until the instruction command and ACK/NACK are transmitted from a base station apparatus to a mobile station apparatus.

When a packet transmitted from the mobile station apparatus is received by RF receiving section 100 in the base station apparatus shown in FIG. 3, the packet undergoes prescribed radio receiving processing and is demodulated by demodulating section 110. At this point, receiving power information is output from RF receiving section 100 to scheduling section 140.

The received packet thus demodulated undergoes error detection and correction in error correction and decoding section 120, the received data is output, a transmission request from the mobile station apparatus contained in the received data is output to scheduling section 140, and the error detection results are output to ACK/NACK generating section 150. An ACK is generated by ACK/NACK generating section 150 if there are no errors in the packet, and a NACK is generated if there is an error in the packet. The generated ACK/NACK is output to error correction coding section 160.

On the other hand, channel quality measuring section 130 measures the uplink quality from the received packet thus demodulated, and outputs the result to scheduling section 140. The receiving power information, the transmission request, and the channel quality are thereby input to scheduling section 140. Scheduling section 140 uses the receiving power information, the transmission request, and the channel quality to perform scheduling and generates an instruction command that indicates an increase or reduction of the communication rate for each mobile station apparatus. The generated instruction command is output to error correction coding section 160.

The transmission signals comprising the transmitted data, ACK/NACK, and instruction commands are subjected to error correction coding by error correction coding section 160, modulated by modulating section 170, subjected to prescribed radio transmission processing by RF transmitting section 180, and thereafter transmitted to the mobile station apparatus by way of an antenna.

Here, since the mobile station apparatus is undergoing a soft handover, packets transmitted from a single mobile station apparatus are received by a plurality of base station apparatuses. In view of this situation, a mobile station apparatus undergoing a soft handover communicates with three base station apparatuses, e.g., base station apparatus #1, base station apparatus #2, and base station apparatus #3. These base station apparatuses #1 to #3 each generate and transmit ACK/NACK's and instruction commands to the mobile station apparatus by using the operation described above. Here, the breakdown of the total receiving power of base station apparatuses #1 to #3 and the uplink propagation environment between the mobile station apparatus and the base station apparatuses are different for each base station apparatus. Therefore, base station apparatuses #1 to #3 do not necessarily transmit the same ACK/NACK and instruction commands.

Described next is the operation in which a mobile station apparatus selects instruction commands and controls the communication rate under such conditions.

The signals transmitted by base station apparatuses #1 to #3 are received by the mobile station apparatus shown in FIG. 4. Specifically, when a signal is received by RF receiving section 200, prescribed radio receiving processing are carried out and the received signals corresponding to each of base station apparatuses #1 to #3 are thereafter demodulated by demodulating section 210. The received signals thus demodulated for each of the base station apparatuses are subjected to error detection and correction by error correction and decoding section 220, and the received data is output. At the same time, instruction commands of each base station apparatus contained in the received data are output to instruction command extracting section 244 of communication rate control section 240, and an ACK or NACK for each of the base station apparatuses is output to data retransmission control section 230 and to ACK/NACK determining section 242 of communication rate control section 240.

When a NACK is transmitted from all of the base station apparatuses in the set of base station apparatuses #1 to #3, data retransmission control section 230 notifies transmitted data buffering section 250 to retransmit the packet, and notifies transmitted data buffering section 250 to transmit the next packet when an ACK is transmitted from even a single base station apparatus.

On the other hand, the transmission rate adopted in actual transmissions is determined in communication rate control section 240 in accordance with the flowchart shown in FIG. 6.

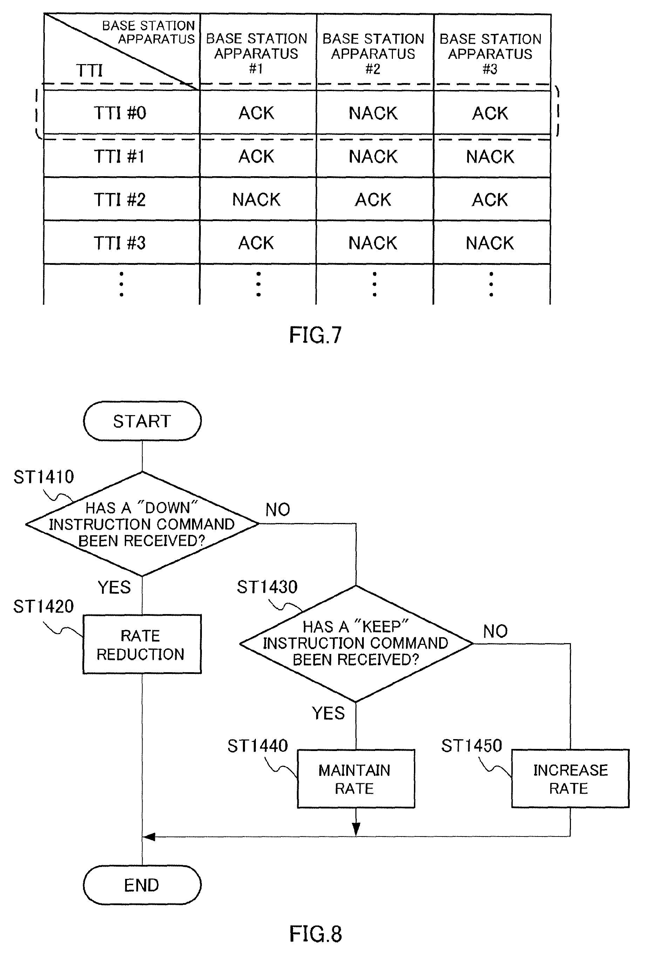

In other words, ACK/NACK determining section 242 first determines if an ACK or NACK has been transmitted from base station apparatuses #1 to #3 (ST1000). At this point, the ACK/NACK determined by ACK/NACK determining section 242 is the more recently received ACK/NACK of each of the base station apparatuses. Specifically, when the ACK/NACK history of each transmission time interval (TTI) is the one shown in FIG. 7, for example, ACK/NACK determining section 242 makes a determination with respect to the ACK or NACK in the most recent TTI #0 enclosed by a broken line. The ACK/NACK reflecting the most recent state of the uplink can thereby be constantly used to select an instruction command.

In FIG. 7, it is determined that base station apparatuses #1 and #3 that transmitted ACK's have better uplink propagation environment than base station apparatus #2, and the packet transmitted from the mobile station apparatus is transferred without an error. Therefore, the uplink packet transmission quality is kept in a good state by controlling the communication rate in accordance with the instruction command from such base station apparatuses, and the number of retransmissions may be reduced.

In view of the above, ACK/NACK determining section 242 determines base station apparatuses #1 and #3 to have the highest priority level among base station apparatuses #1 to #3. ACK/NACK determining section 242 furthermore notifies instruction command extracting section 244 to extract the instruction commands transmitted from these base station apparatuses. Instruction command extracting section 244 then extracts the instruction commands from base station apparatuses #1 and #3 (ST1100) and outputs the instruction commands to rate determining section 246.

Rate determining section 246 determines whether there is a single extracted instruction command (ST1200). As a result, when there is a single extracted instruction command, i.e., when an ACK has been transmitted from a single base station apparatus, the communication rate is determined in accordance with the instruction command of this base station apparatus (ST1300).

On the other hand, when an ACK is transmitted from the two base station apparatuses, i.e., base station apparatus #1 and base station apparatus #3, and the corresponding two instruction commands are extracted, the communication rate is determined (ST1400) from these instruction commands using a hereinafter-described method, as shown in FIG. 7.

In other words, a determination is made whether there is, among the plurality of instruction commands, a "Down" instruction command to reduce the communication rate (ST1410), and the communication rate is reduced if there is even a single "Down" instruction command (ST1420), as shown in FIG. 8. When there is not a single "Down" instruction command, a determination is made whether there is a "Keep" instruction command to maintain the communication rate (ST1430), and the communication rate is maintained if there is even a single "Keep" instruction command (ST1440). When there is not a single "Keep" instruction command, i.e., when all of the instruction commands are "Up" instruction commands to increase the communication rate, the communication rate is increased (ST1450).

The method of determining the communication rate shown in FIG. 8 can be carried out prior to extracting the instruction command. In other words, the communication rate is reduced if there is even a single "Down" instruction command in the instruction commands received from a plurality of base station apparatuses, and the communication rate is maintained if there is not a single "Down" instruction command and there is even a single "Keep" instruction command. The communication rate is increased in any other case, i.e., only when all of the instruction commands are "Up" commands.

When the communication rate is determined in ST1300 or ST1400, as described above with reference again to FIG. 6, rate determining section 246 determines whether the transmission power corresponding to the communication rate thus determined is less than the maximum transmission power that can be transmitted from the mobile station apparatus (ST1500). As a result, if the transmission power corresponding to the communication rate thus determined is less than the maximum transmission power, this communication rate is output from rate determining section 246 as the transmission rate adopted in actual transmissions. Conversely, if the transmission power corresponding to the communication rate thus determined is the maximum transmission power or greater, the communication rate corresponding to the maximum transmission power is output from rate determining section 246 as the transmission rate adopted in actual transmissions. The transmission rate output from rate determining section 246 is input to transmitted data buffering section 250, error correction coding section 260, modulating section 270, and transmission power control section 280.

As described below, when the communication rate determined in ST1300 or ST1400 is the transmission rate, packets are transmitted at the communication rate thus determined (ST1600); and when the communication rate corresponding to the maximum transmission power is the transmission rate, packets are transmitted at the communication rate corresponding to the maximum transmission power (ST1700).

In other words, transmitted data buffering section 250 outputs the amount of transmitted data corresponding to the transmission rate, and error correction coding section 260 performs error correction coding on the transmitted data thus output at the encoding rate corresponding to the transmission rate, and modulating section 270 modulates the data using a modulation method having a modulation multi-value number that corresponds to the transmission rate. Transmission power control section 280 brings the transmission power to a value that corresponds to the transmission rate, and the modulated transmission data is formed into packets and transmitted from RF transmitting section 290 by way of an antenna.

In accordance with the present embodiment as described above, the most recent ACK/NACK's transmitted from the plurality of base station apparatuses are determined, the base station apparatus that has transmitted an ACK is set to the highest priority level, and the mobile station apparatus controls the communication rate on the basis of the instruction command of the communication rate transmitted from this base station apparatus. For this reason, the most recent uplink propagation environment is reflected and an appropriate instruction command is selected from the plurality of communication rate instruction commands transmitted from the base station apparatus, and the interference of the entire system can be reduced and sector throughput improved.

### (Embodiment 2)

Embodiment 2 of the present invention features an assignment of a score to base station apparatuses on the basis of the number of ACK's transmitted within a prescribed length of time, wherein the priority level of the base station apparatus that has transmitted the largest number of ACK's is set to the highest level, and the mobile station apparatus controls the communication rate.

The configuration of the base station apparatus of the present embodiment is the same as the base station apparatus of Embodiment 1 (FIG. 3), and a description of the configuration is therefore omitted. The configuration of the mobile station apparatus of the present embodiment is the same as that of the mobile station apparatus of Embodiment 1 (FIG. 4), except that only the internal configuration of communication rate control section 240 is different than Embodiment 1.

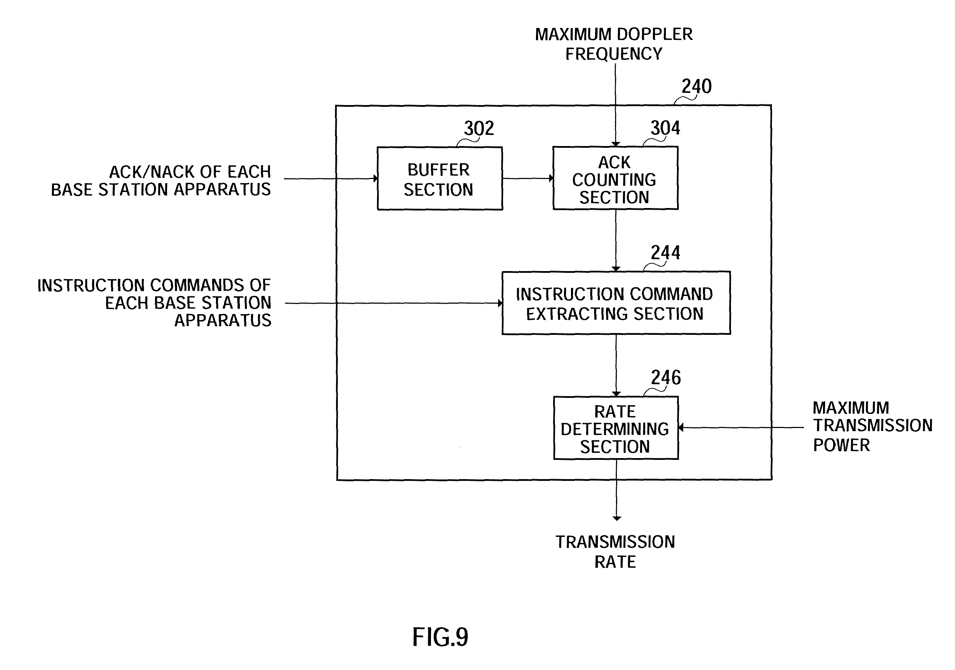

In view of this difference, the internal configuration of communication rate control section 240 of the mobile station apparatus of the present embodiment will be described with reference to FIG. 9. In FIG. 9, the same codes are used for the same parts as FIG. 5, and a description of these parts is omitted.

Communication rate control section 240 of the present embodiment has a buffer section 302, an ACK counting section 304, an instruction command extracting section 244, and a rate determining section 246, as shown in FIG. 9. Buffer section 302, ACK counting section 304, instruction command extracting section 244, and rate determining section 246 mainly operate when the mobile station apparatus undergoes a soft handover.

Buffer section 302 temporarily stores the ACK/NACK for each base station apparatus output from error correction and decoding section 220. At this point, buffer section 302 stores information on whether an ACK or NACK has been returned for each base station apparatus and each TTI.

ACK counting section 304 sets the TTI interval (TTI count), which is the interval in which ACK's are counted, in accordance with the maximum Doppler frequency, which acts as an indicator of the fading fluctuation speed, and the number of ACK's in the corresponding TTI interval is counted.

Specifically, ACK counting section 304 sets, as the TTI interval, the interval that begins from the most recent TTI and ends with a relatively new TTI, because the propagation environment may change in a short period of time when the maximum Doppler frequency is high and the fading fluctuation is rapid. Conversely, ACK counting section 304 selects a TTI interval that begins from the most recent TTI and ends with a relatively old TTI, because the propagation environment may not vary much over a long period of time when the maximum Doppler frequency is low and the fading fluctuation is slow.

ACK counting section 304 determines that the base station that transmits the largest number of ACK's in the TTI interval has stable and good packet transmission quality in the uplink, and sets the priority level of the base station apparatus having the largest number of ACK's to the highest level, and instructs instruction command extracting section 244 to extract the instruction command of this base station apparatus.

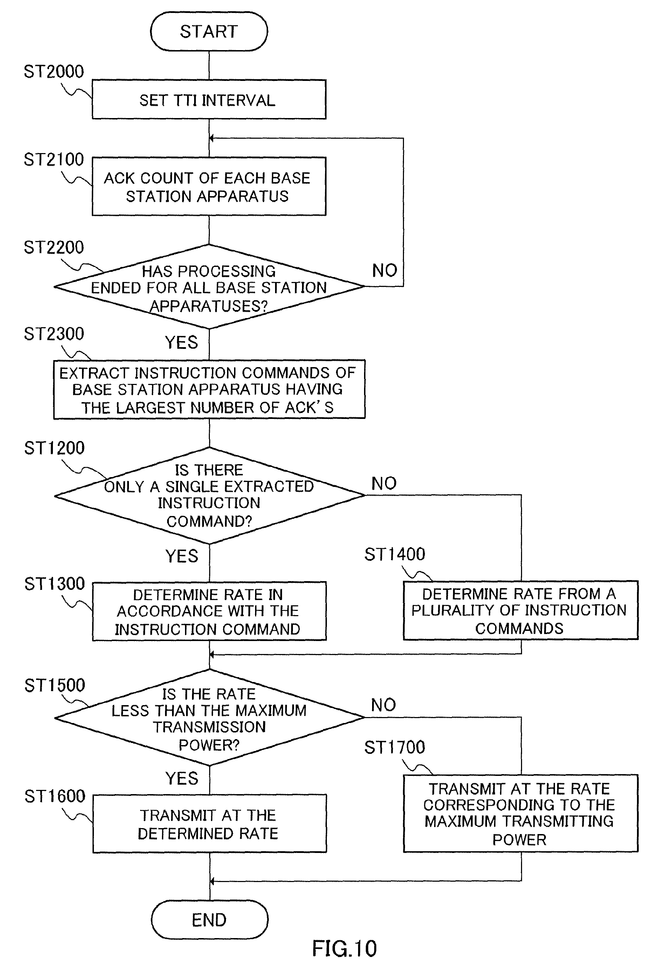

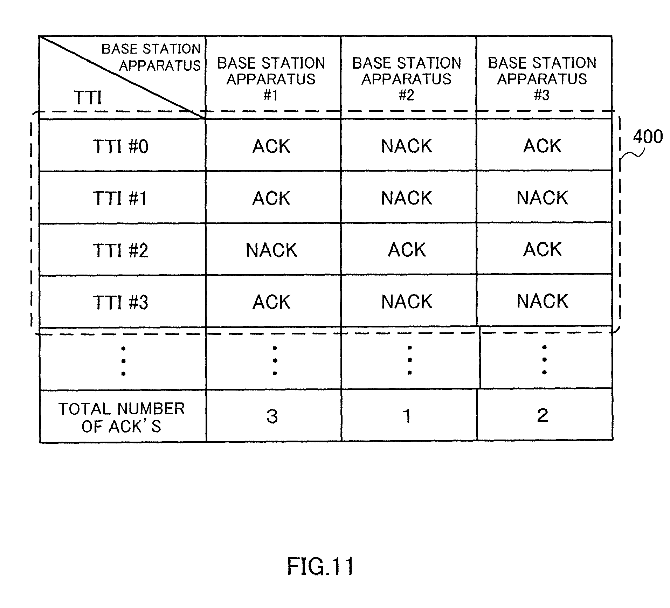

The operation of determining the transmission rate when the mobile station apparatus configured in the manner described above undergoes soft handover is described next in detail with reference to FIGS. 10 and 11. In the present embodiment, the operation that occurs until the instruction command and ACK/NACK are transmitted from a base station apparatus to a mobile station apparatus, and the operation that occurs until the received signal is demodulated and debugged by the mobile station apparatus, are the same as those in Embodiment 1, and a description of these operations is omitted.

Therefore, following is mainly a description of communication rate control in communication rate control section 240 of the mobile station apparatus.

In the present embodiment, an ACK/NACK of each base station apparatus is output to buffer section 302 of communication rate control section 240. The buffer section 302 stores these ACK/NACK's as history. Specifically, ACK/NACK's are stored for each TTI of the respective base station apparatuses #1 to #3, as shown in FIG. 11, for example.

The transmission rate adopted in actual transmissions is determined in communication rate control section 240 in accordance with the flowchart shown in FIG. 10. In FIG. 10, the same codes are assigned to the same parts as those in FIG. 6, and a detailed description of these parts is omitted.

The TTI interval is set by ACK counting section 304 in accordance with the maximum Doppler frequency (ST2000). The TTI interval in the present embodiment is the number of TTIs in which ACK's are counted, the TTI interval is set so that only relatively new TTIs are used when the propagation environment changes frequently, and relatively old TTIs are also used when the propagation environment substantially does not vary. Therefore, relatively short TTI intervals are set when the maximum Doppler frequency is high, and relatively long TTI intervals are set when the maximum Doppler frequency is low.

The number of ACK's for each base station apparatus in the TTI interval are counted by ACK counting section 304 (ST2100), and the step is repeated until the ACK's are counted for all of the base station apparatuses (ST2200). In the example shown in FIG. 11, four TTIs, i.e., TTI #0 to #3 enclosed by a broken line, are set as TTI interval 400. First, the number of ACK's of base station apparatus #1 is counted to obtain a result of 3, the number of ACK's of base station apparatus #2 is subsequently counted to obtain a result of 1, and the number of ACK's of base station apparatus #3 is lastly counted to obtain a result of 2. These ACK counts are used as the score assigned to the respective base station apparatuses.

In FIG. 11, base station apparatus #1 having the highest score (i.e., the number of ACK transmissions is the highest in TTI interval 400) is determined to have an uplink propagation environment that is more stable and better than the other base station apparatuses #2 and #3, and that packets transmitted from the mobile station apparatus will be transferred without an error. Therefore, by controlling the communication rate in accordance with the instruction command from such a base station apparatus, it is possible to keep the uplink packet transmission quality good and reduce the number of retransmissions.

In view of the above, ACK counting section 304 determines the priority level of base station apparatus #1, which transmitted the largest number of ACK's in the TTI interval 400 among base station apparatuses #1 to #3, to be highest level. ACK counting section 304 furthermore notifies instruction command extracting section 244 to extract the instruction command transmitted from base station apparatus #1. Instruction command extracting section 244 then extracts the instruction command of base station apparatus #1 (ST2300) and outputs the instruction command to rate determining section 246.

In the same manner as Embodiment 1, rate determining section 246 determines the communication rate from the instruction command, compares the maximum transmission power of the mobile station apparatus and the transmission power that corresponds to the communication rate thus determined, and uses as the ultimate transmission rate the communication rate thus determined or the communication rate that corresponds to the maximum transmission power.

In the example shown in FIG. 11, base station apparatus #1 is the only base station apparatus with a maximum number of ACK's. Therefore, the communication rate is determined in accordance with the instruction command of base station apparatus #1, and if the transmission power corresponding to this communication rate is less than the maximum transmission power, the communication rate thus determined will be used unchanged as the transmission rate. If the transmission power corresponding to the communication rate thus determined is the maximum transmission power or greater, the transfer corresponding to the maximum transmission power will be used as the transmission rate. The transmission rate thus determined is input from rate determining section 246 to transmitted data buffering section 250, error correction coding section 260, modulating section 270, and transmission power control section 280, and packets are transmitted in accordance with the transmission rate in the same manner as Embodiment 1.

Asdescribedabove, in accordance with the present embodiment, since the priority level of the base station apparatus that transmitted the largest number of ACK's for packets in the TTI interval set in accordance with the maximum Doppler frequency is set to the highest level, the stability and quality of the uplink propagation environment can be reflected in the selection of an instruction command.

In the present embodiment, the ACK's were merely counted, but only the ACK's corresponding to initially transmitted packet may be counted. All ACK's are not equal, an ACK that immediately follows a NACK signifies that the ACK is related to a retransmitted packet, and the fact that a retransmission has occurred indicates that the uplink transmission quality is not good. Therefore, two or more sequentially transmitted ACK's are judged to be ACK's of packets that were transmitted on the first attempt. The uplink propagation environment can be more accurately reflected by counting only such ACK's.

In the same manner, ACK's of packets that were transmitted on the first attempt may be counted as a single ACK, and ACK's of retransmitted packets may be counted in increments of 0.5 so as to weight and count the ACK's in accordance with the number of retransmissions.

In the present embodiment, ACK's that occur in newer TTIs in the TTI interval may be given a higher weighting. Specifically, ACK's of the most recent TTI may be counted as a single ACK, and ACK's of the previous TTI may be counted in increments of 0.5 so as to weight and count the ACK's in accordance with the recentness of the corresponding TTI.

### (Embodiment 3)

Embodiment 3 of the present invention features a configuration in which a numeric value is assigned to ACK's and NACK's in a prescribed period of time, the values are converted into points, the arithmetic mean of the points is used as the score of the base station apparatus, the priority level of the base station apparatus having the largest score is set to the highest level, and the mobile station apparatus controls the communication rate.

The configuration of the base station apparatus of the present embodiment is the same as the base station apparatus of Embodiment 1 (FIG. 3). Therefore, a description of the configuration is omitted. Also, the configuration of the mobile station apparatus of the present embodiment is the same as the mobile station apparatus of Embodiment 1 (FIG. 4), except that only the internal configuration of communication rate control section 240 is different than Embodiment 1.

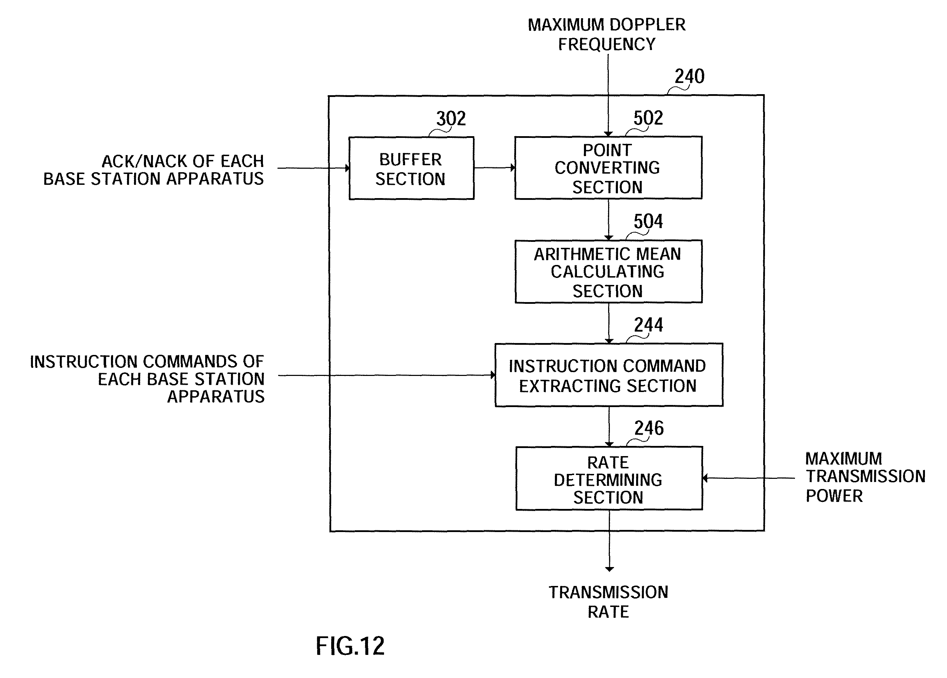

In view of this difference, the internal configuration of communication rate control section 240 of the mobile station apparatus of the present embodiment will be described with reference to FIG. 12. In FIG. 12, the same codes are used for the same parts as those in FIGS. 5 to 9, and a description of these parts is omitted.

Communication rate control section 240 of the present embodiment has a buffer section 302, a point converting section 502, an arithmetic mean calculating section 504, an instruction command extracting section 244, and a rate determining section 246, as shown in FIG. 12. Buffer section 302, point converting section 502, arithmetic mean calculating section 504, instruction command extracting section 244, and rate determining section 246 mainly operate when the mobile station apparatus undergoes a soft handover.

Point converting section 502 sets the TTI interval in which the ACK/NACK's are converted to points in accordance with the maximum Doppler frequency, and points are assigned to ACK/NACK's for each base station apparatus in this TTI interval.

Specifically, point converting section 502 sets the TTI interval to begin from the newest TTI and end at a relatively new TTI when the maximum Doppler frequency is high, and sets the TTI interval to begin from the newest TTI and end at a relatively old TTI when the maximum Doppler frequency is low.

Point converting section 502 assigns 1 point to ACK's in the TTI interval and assigns 0 points to NACK's, for example, so as to form numeric values and to assign points, and the points for each base station apparatus are output to arithmetic mean calculating section 504.

Arithmetic mean calculating section 504 calculates the arithmetic mean of the points of each base station apparatus, judges that the packet transmission quality in the uplink is stable and good in relation to the base station apparatus having the highest arithmetic mean, sets the priority level of the base station apparatus having the highest arithmetic mean to the highest level, and instructs instruction command extracting section 244 to extract the instruction command of this base station apparatus.

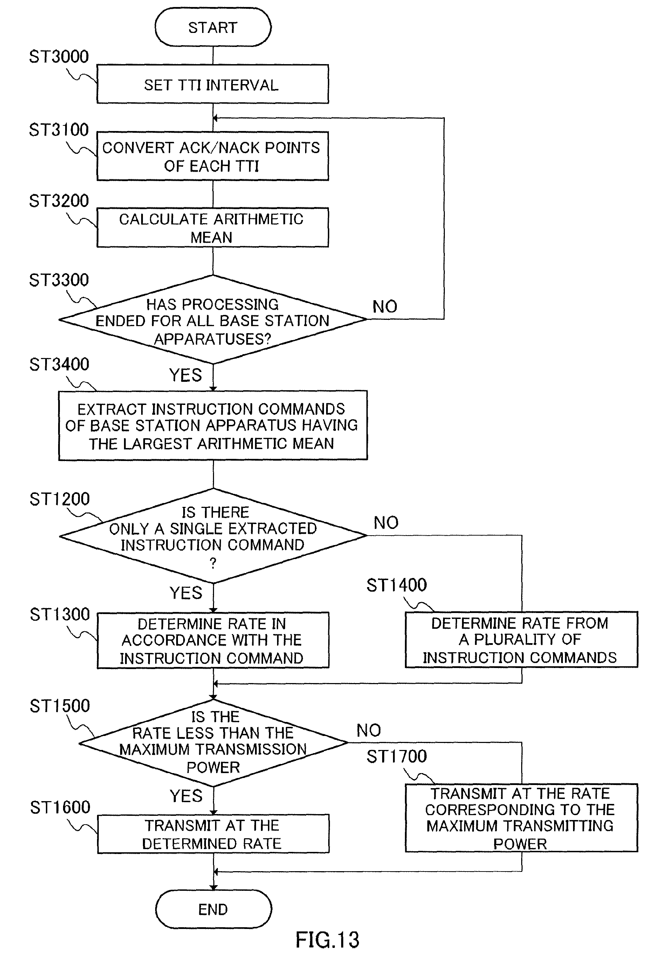

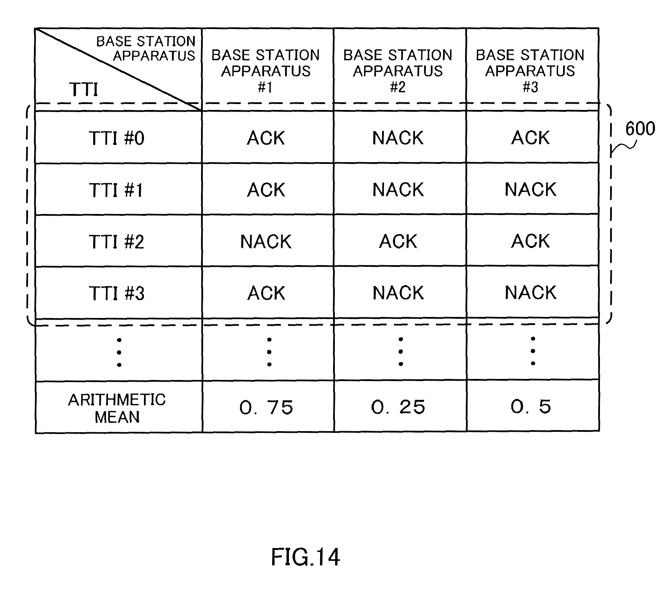

The operation of determining the transmission rate when the mobile station apparatus configured in the manner described above undergoes soft handover is described next in detail with reference to FIGS. 13 and 14. In the present embodiment, the operation that occurs until the instruction command and ACK/NACK are transmitted from a base station apparatus to a mobile station apparatus, and the operation that occurs until the received signal is demodulated and debugged by the mobile station apparatus are the same as those in Embodiment 1, and a description of these operations is omitted.

Therefore, the communication rate control in communication rate control section 240 of the mobile station apparatus is mainly described below.

In the present embodiment, ACK/NACK's of each base station apparatus are output from error correction and decoding section 220 to buffer section 302 in the same manner as Embodiment 2. These ACK/NACK's are stored as history by buffer section 302. Specifically, ACK/NACK's are stored for each TTI of the respective base station apparatuses #1 to #3, as shown in FIG. 14, for example.

The transmission rate used in actual packet transmissions is determined in communication rate control section 240 in accordance with the flowchart shown in FIG. 13. In FIG. 13, the same codes are used for the same parts as those in FIG. 6, and a detailed description is omitted.

First, point converting section 502 sets the TTI interval in accordance with the maximum Doppler frequency (ST3000). The TTI interval in the present embodiment is the number of TTIs in which ACK/NACK's are converted to points, the TTI interval is set so that only relatively new TTIs are used when the propagation environment changes frequently, and relatively old TTIs are also used when the propagation environment substantially does not vary. Therefore, relatively short TTI intervals are set when the maximum Doppler frequency is high, and relatively long TTI intervals are set when the maximum Doppler frequency is low.

Point converting section 502 then converts the ACK/NACK's for each base station apparatus in the TTI interval into points (ST3100). Here, an ACK is given 1 point and a NACK is given 0 points, for example, to convert ACK/NACK's to points. The points for each base station apparatus are output to arithmetic mean calculating section 504. Arithmetic mean calculating section 504 calculates the arithmetic mean of the points for each base station apparatus (ST3200), and the step is repeated until the arithmetic mean of the points is calculated for all of the base station apparatuses (ST3300). In the example shown in FIG. 14, four TTIs, i.e., TTI #0 to #3 enclosed by a broken line, are set as TTI interval 600. First, the arithmetic mean of base station apparatus #1 is calculated to be 0.75 (= 3/4), the arithmetic mean of base station apparatus #2 is calculated to be 0.25 (= 1/4), and the arithmetic mean of base station apparatus #3 is calculated to be 0.5 (= 2/4). The arithmetic mean of these points is used as a score assigned to the respective base station apparatuses.

Here, since the number of TTI intervals of all base station apparatuses #1 to #3 is set to four, the denominator when the arithmetic mean is calculated is the same for all base station apparatuses #1 to #3, but when the TTI intervals are different for each of the base station apparatuses in accordance with the maximum Doppler frequency, the denominators for calculating the arithmetic mean are also different. When the TTI intervals differ in this manner, the uplink transmission quality cannot be compared using only the number of ACK's in the TTI intervals, but in the present embodiment, the uplink transmission quality can be compared by merely comparing the scores of base station apparatuses #1 to #3.

In FIG. 14, The uplink propagation environment of base station apparatus #1, which has a higher score (i.e., the arithmetic mean of the points in the TTI intervals is highest) is more stable and better than that of the other base station apparatuses #2 and #3, and the packets transmitted from the mobile station apparatus are judged to transfer without an error. Therefore, the uplink transmission quality can be kept in a good condition, and the number of retransmissions may be reduced, by controlling the communication rate in accordance with instruction commands from such a base station apparatus.

In view of the above, arithmetic mean calculating section 504 determines that the priority level of base station apparatus #1, which has the highest arithmetic mean of the points in TTI interval 600, is the highest from among base station apparatuses #1 to #3. Arithmetic mean calculating section 504 furthermore notifies instruction command extracting section 244 to extract the instruction command from base station apparatus #1. Instruction command extracting section 244 then extracts the instruction command of base station apparatus #1 (ST3400) and outputs the instruction command to rate determining section 246.

In the same manner as Embodiment 1, rate determining section 246 determines the communication rate from the instruction command, compares the maximum transmission power of the mobile station apparatus and the transmission power that corresponds to the communication rate thus determined, and uses as the ultimate transmission rate the communication rate thus determined or the communication rate that corresponds to the maximum transmission power.

In the example shown in FIG. 14, base station apparatus #1 is the only base station apparatus with the highest arithmetic mean of the points. Therefore, the communication rate is determined in accordance with the instruction command of base station apparatus #1, and if the transmission power corresponding to this communication rate is less than the maximum transmission power, the communication rate thus determined will be used unchanged as the transmission rate. If the transmission power corresponding to the determined communication rate is the maximum transmission power or greater, the transfer corresponding to the maximum transmission power will be used as the transmission rate. The transmission rate thus determined is input from rate determining section 246 to transmitted data buffering section 250, error correction coding section 260, modulating section 270, and transmission power control section 280, and packets are transmitted in accordance with the transmission rate in the same manner as Embodiment 1.

As described above, in accordance with the present embodiment, since points are assigned to ACK/NACK's of packets in the TTI interval that has been set in accordance with the maximum Doppler frequency, and the priority level of the base station apparatus that has the largest arithmetic mean of the points is set to the highest level, the stability and quality of the uplink propagation environment can be reflected in the selection of an instruction command.

Also possible in the present embodiment is a configuration in which the arithmetic mean of each base station apparatus thus calculated is compared with a prescribed threshold, and the instruction command is extracted from the base station apparatus in which the arithmetic mean is equal to or higher than the prescribed threshold. As described in Embodiment 1, when there is more than one extracted instruction command, the communication rate is reduced if there is even a single "Down" instruction command, and the communication rate is maintained if there is not a single "Down" instruction command and there is even a single "Keep" instruction command. The communication rate is increased when all of the instruction commands are "Up" commands.

In the present embodiment, the ratio of ACK's to NACK's in the TTI intervals is considered by assigning points to the ACK/NACK's in the TTI intervals, which is different than Embodiment 2. For this reason, an absolute reference is provided to the ratio of ACK's to NACK's by comparing the arithmetic means of the points against a threshold, and base station apparatuses having poor transmission quality in the uplink can be reliably eliminated. Therefore, not only can a relative comparison be made between base station apparatuses, but an absolute judgment of the uplink transmission quality can be reflected by making a threshold comparison.

### (Embodiment 4)

Embodiment 4 of the present invention features a configuration in which the score of each base station apparatus calculated in the past is multiplied by a forgetting factor, the result of adding to the multiplied score points in which a numeric value is assigned to the ACK's and NACK's newly transmitted from a base station apparatus is used as the score of the base station apparatus, the priority level of the base station apparatus having the highest score is set to the highest level, and the mobile station apparatus controls the communication rate.

The configuration of the base station apparatus of the present embodiment is the same as the base station apparatus of Embodiment 1 (FIG. 3), and a description of the configuration is therefore omitted. The configuration of the mobile station apparatus of the present embodiment is the same as that of the mobile station apparatus of Embodiment 1 (FIG. 4), except that only the internal configuration of communication rate control section 240 is different than Embodiment 1.

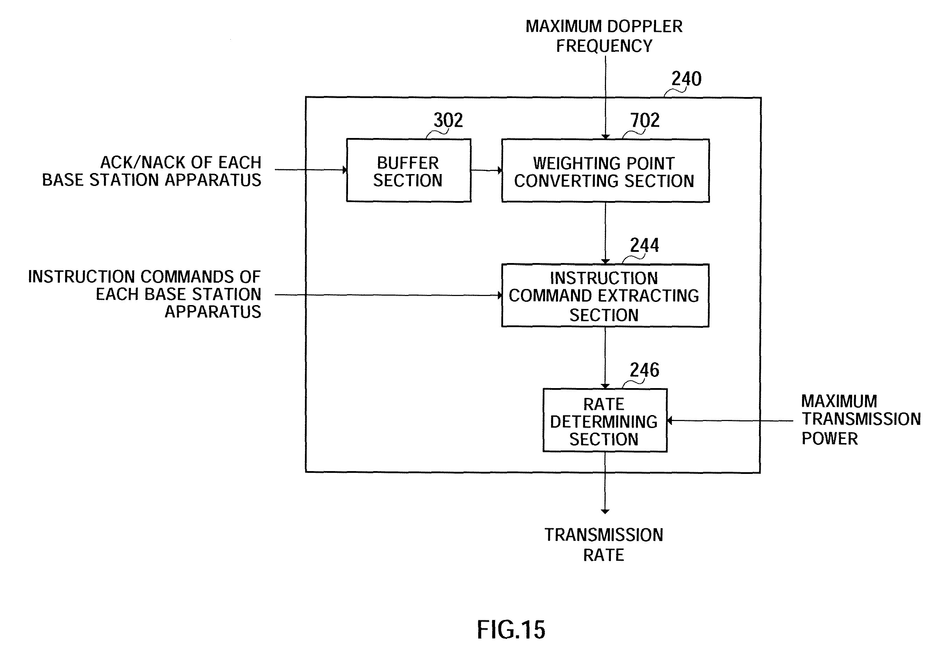

In view of this difference, the internal configuration of communication rate control section 240 of the mobile station apparatus of the present embodiment will be described with reference to FIG. 15. In FIG. 15, the same codes are used for the same parts as FIGS. 5 and 9, and a description of these parts is omitted.

Communication rate control section 240 of the present embodiment has buffer section 302, weighting point converting section 702, instruction command extracting section 244, and rate determining section 246, as shown in FIG. 15. Buffer section 302, weighting point converting section 702, instruction command extracting section 244, and rate determining section 246 mainly operate when the mobile station apparatus undergoes a soft handover.

Weighting point converting section 702 determines the forgetting factor of the previously calculated score in accordance with the maximum Doppler frequency, and adds the points assigned to new ACK's or NACK's to the previous score thus multiplied by a forgetting factor to calculate the current score.

Specifically, weighting point converting section 702 multiplies the previous score and the forgetting factor in which the weight of the previous score is relatively low, doing so when the maximum Doppler frequency is high, and multiplies the previous score and the forgetting factor in which the weight of the previous score is relatively high, doing so when the maximum Doppler frequency is low.

The points assigned to ACK/NACK's (an ACK is 1 point and a NACK is 0 points, for example) transmitted from the base station apparatus after the previous score has been calculated are added by weighting point converting section 702 to the previous score multiplied by the forgetting factor, and the section calculates the current score. Weighting point converting section 702 furthermore judges that the packet transmission quality in the uplink is stable and good in relation to the base station apparatus that has the highest current score thus calculated, sets the priority level of the base station apparatus having the highest current score to the highest level, and instructs instruction command extracting section 244 to extract the instruction command of this base station apparatus.

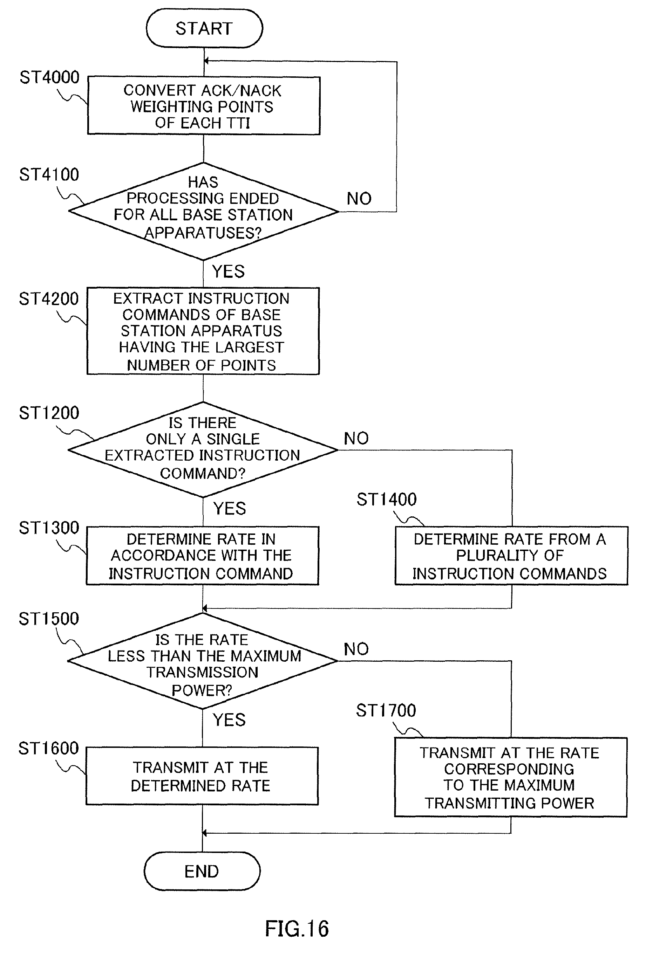

The operation of determining the transmission rate when the mobile station apparatus configured in the manner described above undergoes soft handover is described next in detail with reference to FIG. 16. In the present embodiment, the operation that occurs until the instruction command and ACK/NACK are transmitted from a base station apparatus to a mobile station apparatus, and the operation that occurs until the received signal is demodulated and debugged by the mobile station apparatus, are the same as those in Embodiment 1, and a description of these operations is therefore omitted.

Therefore, following is mainly a description of communication rate control in communication rate control section 240 of the mobile station apparatus.

In the present embodiment, an ACK/NACK is output from error correction and decoding section 220 to buffer section 302 of each base station apparatus in the same manner as Embodiment 2. The buffer section 302 stores these ACK/NACK's as history.

The transmission rate adopted in actual transmissions is determined in communication rate control section 240 in accordance with the flowchart shown in FIG. 16. In FIG. 16, the same codes are assigned to the same parts as those in FIG. 6, and a detailed description of these parts is omitted.

First, weighting point converting section 702 calculates the weighted score for each base station apparatus (ST4000). Specifically, weighting point converting section 702 determines the forgetting factor that corresponded to the maximum Doppler frequency, and multiplies the forgetting factor and the previously calculated score. The forgetting factor is determined to be a value that relatively reduces the weight of the previous score when the propagation environment changes frequently, and is determined to be a value that relatively increases the weight of the previous score when the propagation environment does not change very much. Therefore, when the maximum Doppler frequency is high, a relatively small forgetting factor is used, and when the maximum Doppler frequency is low, a relatively large forgetting factor is used.

Weighting point converting section 702 refers to buffer section 302 in order to assign points to new ACK/NACK's transmitted from the base station apparatus after the previous score has been calculated. Points are assigned to ACK/NACK's by converting the ACK/NACK's to a numeric value, e.g., an ACK is 1 point and a NACK is 0 points. Weighting point converting section 702 multiplies the previous score by the forgetting factor and adds to the multiplied score the new ACK/NACK points to calculate the current score. Weighting point converting section 702 uses 0 as the forgetting factor and does not give consideration to the previous score when the score is initially calculated. In this manner, weighting point converting section 702 calculates a score that has been temporally weighted for each base station apparatus, and the processing is repeated until the current score has been calculated for all base station apparatuses (ST4100).

In the base station apparatus having the highest current score calculated in this manner, a determination is made that the uplink propagation environment is good even considering the state as recent as the previous point conversion, and that packets transmitted from the mobile station apparatus will be transfer without an error. Therefore, the uplink packet transmission quality is kept in a good state by controlling the communication rate in accordance with the instruction command from such base station apparatuses, and the number of retransmissions may be reduced.

In view of the above, weighting point converting section 702 sets the priority level of the base station apparatus having the highest current score to be the highest level. Weighting point converting section 702 furthermore notifies instruction command extracting section 244 to extract the instruction command transmitted from the base station apparatus having the highest priority level. Instruction command extracting section 244 then extracts the instruction command notified by weighting point converting section 702 (ST4200), and outputs the instruction command to rate determining section 246.

In the same manner as Embodiment 1, rate determining section 246 determines the communication rate from the instruction command, compares the maximum transmission power of the mobile station apparatus and the transmission power that corresponds to the communication rate thus determined, and uses as the ultimate transmission rate the communication rate thus determined or the communication rate that corresponds to the maximum transmission power. The transmission rate is then input from rate determining section 246 to transmitted data buffering section 250, error correction coding section 260, modulating section 270, and transmission power control section 280, and packets are transmitted in accordance with the transmission rate in the same manner as Embodiment 1.

As described above, in accordance with the present embodiment, the previous score is multiplied by the forgetting factor that was determined in accordance with the maximum Doppler frequency, and the points of the new ACK/NACK's are added to the previous score thus multiplied by the forgetting factor to calculate the current score. Since the priority level of the base station apparatus having the highest current score is set to the highest level, the stability and quality of the uplink propagation environment can be reflected in the selection of an instruction command.

The maximum Doppler frequency is used to determine the forgetting factor and to set the TTI interval in Embodiments 2 to 4 described above, but the mobile station apparatus may measure the maximum Doppler frequency by using the uplink signals, or the base station apparatus may measure the maximum Doppler frequency by using the uplink signals and provide the result to the mobile station apparatus. In the examples shown in FIGS. 11 and 14, the same TTI intervals set in accordance with the maximum Doppler frequency were used by all base station apparatuses #1 to #3, but since each of the base station apparatuses may in actuality measure different maximum Doppler frequencies, different TTI intervals may be set in each of base station apparatuses #1 to #3. Similarly, the forgetting factor in Embodiment 4 may also be different for each base station apparatus.

In Embodiments 3 and 4 described above, an ACK was assigned 1 point and a NACK was assigned 0 points to be converted to a numeric value, but the points assigned to these responses may be an arbitrary number of points.

In Embodiments 3 and 4 described above, the points for an ACK to an initially transmitted packet may be set to a high value, and the points for anACK to a retransmitted packet may be set to a lower value. ACK's are not required to have the same value, which indicates that an ACK that has occurred immediately after a NACK has been transmitted is an ACK in response to a retransmitted packet, and the fact that a retransmission has occurred indicates that the uplink transmission quality is not good. Therefore, two or more sequentially transmitted ACK's are judged to be ACK's of packets that were transmitted on the first attempt, and the uplink propagation environment can be more accurately reflected by assigning high points to such ACK's.

In the same manner, points may be graded in accordance with the number of sequentially occurring NACK's prior to an ACK. In other words, if a NACK occurred a single time prior to an ACK, retransmission has occurred only one time, and a relatively high number of points may be assigned. If a NACK has sequentially occurred twice prior to an ACK, retransmission has occurred twice, and a relatively low number of points may be assigned.

### (Embodiment 5)

Embodiment 5 of the present invention features a configuration in which the transmission power corresponding to the communication rate determined from the instruction command is compared with the allowable transmission power corresponding to the power that can be received in a base station apparatus when a mobile station apparatus determines the ultimate transmission rate.

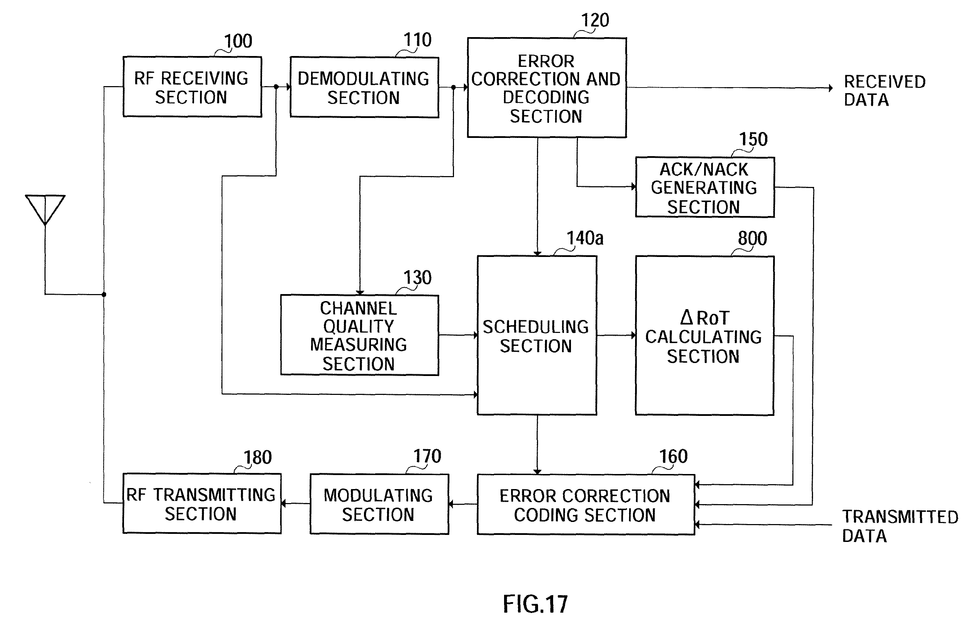

FIG. 17 is a block diagram showing the constituent elements of the base station apparatus of Embodiment 5. The base station apparatus shown in FIG. 17 uses scheduling section 140a in place of scheduling section 140 of the base station apparatus of FIG. 3, and has a configuration in which ΔRoT calculating section 800 has been added.

Scheduling section 140a determines the base station apparatus receiving power assigned to packets from each mobile station apparatus on the basis of the receiving power information output from RF receiving section 100, the transmission request output from error correction and decoding section 120, and the channel quality measured by channel quality measuring section 130, and generates a communication rate instruction command for each mobile station apparatus corresponding to the receiving power assigned to each of the mobile station apparatuses.

Scheduling section 140a outputs the RoT threshold, the receiving power information, and the result of assigning receiving power by scheduling to ΔRoT calculating section 800.

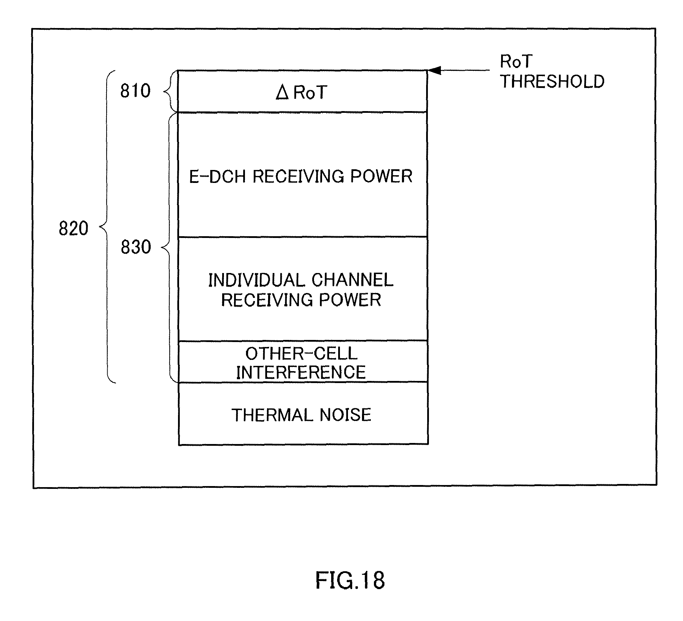

ΔRoT calculating section 800 calculates, based on the RoT threshold and the result of assigning receiving power, the ΔRoT that shows the power that can be further received at the base station apparatus. Specifically, ΔRoT calculating section 800 calculates the ΔRoT 810 shown in FIG. 18. In other words, ΔRoT calculating section 800 subtracts the thermal noise power from the RoT threshold and calculates a target RoT 820. ΔRoT calculating section 800 subtracts the thermal noise power from the total receiving power of the entire signal actually received in RF receiving section 100 to obtain a receiving RoT 830. ΔRoT calculating section 800 furthermore subtracts receiving RoT 830 from target RoT 820 to calculate ΔRoT 810. ΔRoT thus calculated is reported to the mobile station apparatuses in the cell by way of error correction coding section 160, modulating section 170, and RF transmitting section 180. In the present embodiment, the mobile station apparatus receives a ΔRoT from each of a plurality of base station apparatuses because the mobile station apparatus is undergoing a soft handover.

ΔRoT calculating section 800 may replace the E-DCH receiving power in FIG. 18 with the result of assigning receiving power through scheduling and calculate a predicted ΔRoT.

The configuration of the mobile station apparatus according to the present embodiment is the same as the mobile station apparatus of Embodiment 1 (FIG. 4), except that the internal configuration of communication rate control section 240 is different from Embodiment 1.

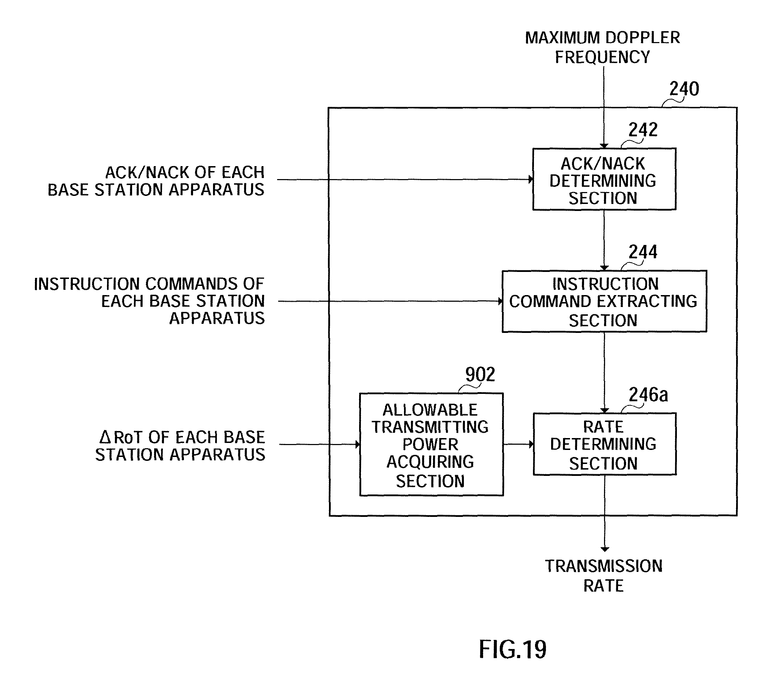

In view of this difference, the internal configuration of communication rate control section 240 of the mobile station apparatus of the present embodiment will be described with reference to FIG. 19. In FIG. 19, the same codes are used for the same parts as FIG. 5, and a description of these parts is omitted.

Communication rate control section 240 according to the present embodiment comprises an ACK/NACK determining section 242, an instruction command extracting section 244, a rate determining section 246a, and an allowable transmitting power acquiring section 902. ACK/NACK determining section 242, instruction command extracting section 244, rate determining section 246a, and allowable transmitting power acquiring section 902 mainly operate when the mobile station apparatus undergoes a soft handover.

Rate determining section 246a determines from the content of the plurality of instruction commands whether to increase, maintain, or reduce the communication rate when there is a plurality of instruction commands extracted by instruction command extracting section 244. Rate determining section 246a determines whether the transmitting power corresponding to the communication rate determined from the content of the plurality of instruction commands exceeds the allowable transmitting power that can be received by all of the base station apparatuses, and decides on the ultimate transmission rate.

Allowable transmitting power acquiring section 902 selects the smallest ΔRoT from among the ΔRoTs of each base station apparatus, and notifies rate determining section 246a of the transmission power corresponding to the smallest ΔRoT as the allowable transmission power. Specifically, allowable transmitting power acquiring section 902 sets as the allowable transmission power the power obtained by adding the ΔRoT to the current transmission power (the transmission power corresponding to the receiving power from the mobile station apparatus included in the receiving RoT of the base station apparatus) of the mobile station apparatus, for example.

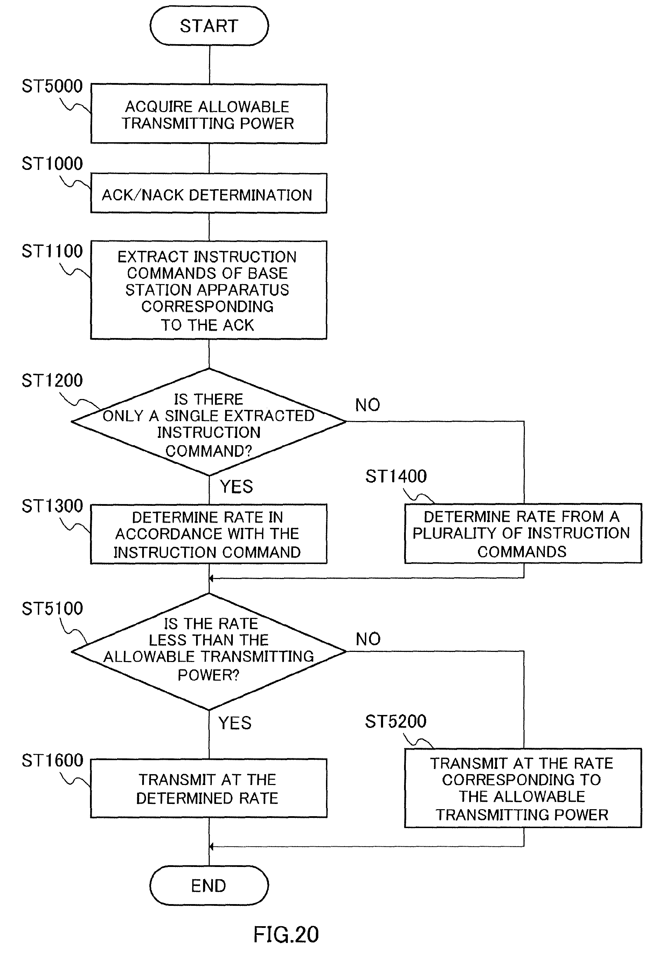

The operation of determining the communication rate when the mobile station apparatus configured in the manner described above undergoes soft handover is described next in detail with reference to FIG. 20. In the present embodiment, the ΔRoT is reported from the base station apparatus to the mobile station apparatus, and the operation that occurs until the received signal is demodulated and debugged by the mobile station apparatus is otherwise the same as Embodiment 1. A description of this operation is therefore omitted.

Therefore, following is mainly a description of communication rate control in communication rate control section 240 of the mobile station apparatus.

In the present embodiment, the ΔRoT reported by the base station apparatus is output from error correction and decoding section 220 to allowable transmitting power acquiring section 902 of communication rate control section 240. In other words, the ΔRoT of each base station apparatus acting as the communicating party is input to allowable transmitting power acquiring section 902.

Communication rate control section 240 determines the transmission rate adopted in actual transmissions in accordance with the flowchart shown in FIG. 20. In FIG. 20, the same codes are used for the same parts in FIG. 6, and a description of these parts is omitted.

First, allowable transmitting power acquiring section 902 selects the smallest ΔRoT among the ΔRoTs of each base station apparatus. The transmission power corresponding to the smallest ΔRoT is acquired as the allowable transmission power (ST5000). This allowable transmission power is reported to rate determining section 246a.

Since the ΔRoT shows the power that can be received at each of the base station apparatuses, the receiving power will exceed the RoT threshold of a base station apparatus and the interference in the cells covered by a base station apparatus will increase if packets are transmitted at a transmission power that exceeds the transmission power allowed by this ΔRoT. The interference of the entire system can be prevented from increasing by transmitting packets at a transmission power which gives consideration to the smallest ΔRoT.

After the allowable transmission power has been acquired, the priority level of the base station apparatus that has returned an ACK for the most recent TTI is set to the highest level in the same manner as Embodiment 1, the instruction command from this base station apparatus is extracted, and the communication rate is determined.

Rate determining section 246a determines whether the transmission power that corresponds to the communication rate thus determined is less than the allowable transmission power (ST5100). As a result, packets are transmitted using this communication rate as the transmission rate if the transmission power corresponding to the communication rate thus determined is less than the allowable transmission power. Conversely, packets are transmitted using as the transmission rate the communication rate that corresponds to the allowable transmission power if the transmission power corresponding to the communication rate thus determined is the allowable transmission power or higher (ST5200).

In Embodiments 1 to 4, the ultimate transmission rate was determined by a method in which the transmission power corresponding to the communication rate that is in accordance with the instruction command is compared with the maximum transmission power that can be transmitted from a mobile station apparatus. However, when packets are transmitted at this transmission power, there is a possibility that the receiving power in any of the base station apparatuses that receive packets will exceed the receivable range, even if the transmission power corresponding to the communication ratetransmission rate that is in accordance with the instruction command is less than the maximum transmission power.

In view of the above, in the present embodiment, the ultimate transmission rate is determined by a method in which the transmission power corresponding to the communication rate that is in accordance with the instruction command is compared with the allowable transmission power corresponding to the smallest value of the ΔRoT reported by the base station apparatus.

Therefore, the receiving power does not exceed the receivable range in all of the base station apparatuses that receive packets, and the interference of the entire system can be prevented from increasing.

In accordance with the present embodiment as described above, the communication rate instruction command transmitted from a base station apparatus having a good uplink transmission quality is selected, and the communication rate that is in accordance with instruction command is used as the actual transmission rate only when the transmission power corresponding to the communication rate that is in accordance with the instruction command is less than the allowable transmission power. For this reason, the receiving power does not exceed the receivable range in all of the base station apparatuses that receive packets from the mobile station apparatus, and the interference of the entire system can be prevented from increasing.

In the present embodiment, a system was described in which instruction commands from the base station apparatus in which the most recent receipt confirmation response was an ACK were extracted in the same manner as in Embodiment 1, but the instruction commands may be extracted using the same methods as in Embodiments 2 to 4.

For convenience in description in the present embodiment, the transmission power corresponding to the communication rate that is in accordance with the instruction command was compared with only the allowable transmission power, but a comparison is also preferably made with the maximum transmission power that can be transmitted from the mobile station apparatus. This makes it possible to securely eliminate communication rates that correspond to a transmission power that cannot be transmitted from the mobile station apparatus, and to a transmission power that exceeds the RoT threshold of the base station apparatus.

In Embodiments 1 to 5 described above, configurations were described in which the mobile station apparatus undergoing soft handover receives ACK/NACK's and instruction commands from all base station apparatuses which are communicating parties, but the base station apparatus having the highest priority level may be determined in advance using the ACK/NACK's.

Specifically, based on the ACK/NACK's, the mobile station apparatus may determine in advance the base station apparatus having the highest priority level by using the same methods as Embodiments 1 to 5 described above. The base station apparatus having the highest priority level may be reported to all base station apparatuses which are communicating parties, and instruction commands may be transmitted from only the base station apparatus having the highest priority level. In this case, the transmission rate is determined in accordance with the instruction command, and a response may be returned as to whether transmission at the transmission rate is allowed from apparatuses other than the base station apparatus having the highest priority level.

The mobile station apparatus according to a first aspect of the present invention employs a configuration that comprises a receiving section for receiving receipt confirmation responses to uplink signals or instruction commands that instruct an uplink communication rate, which responses or commands have been transmitted from a plurality of base station apparatuses; and a control section for determining the transmission rate used in actual transmissions on the basis of at least one option selected from the instruction commands and the received receipt confirmation responses.

According to this configuration, an instruction command of a receipt confirmation response or the communication rate for an uplink signal is received, and the communication rate is controlled based on at least one of them, so that, by determining the actual communication rate from the plurality of different instruction commands or by determining the actual communication rate by reflecting the receipt confirmation response, it is possible to consider the state of the uplink propagation path toward the base station apparatuses, thereby reducing the interference in the entire system and improving the sector throughput.

The mobile station apparatus according to a second aspect of the present invention employs the configuration in the first aspect described above, wherein the control section determines as the transmission rate the communication rate that is in accordance with the instruction command to reduce the communication rate when at least one instruction command instructing a communication rate reduction has been received; and determines as the transmission rate the communication rate that corresponds to the instruction command to maintain the communication rate when at least one instruction command instructing that the communication rate be maintained has been received and an instruction command instructing a communication rate reduction has not be received.

According to this configuration, the communication rate is controlled in accordance with the instruction command that instructs the lowest communication rate, from the instruction commands received from a plurality of base station apparatuses, so that it is possible to prevent increase of interference in the entire system and increase the subscriber capacity.

The mobile station apparatus according to a third aspect of the present invention employs the configuration in the first aspect described above, wherein the control section comprises a selecting section for selecting a base station apparatus having a maximum priority level among the plurality of base station apparatuses by using the receipt confirmation response; and a determining section for determining a transmission rate from a communication rate that is in accordance with the instruction command of the selected base station apparatus.

In accordance with this embodiment, the base station apparatus having the highest priority level among the base station apparatuses is selected and the communication rate is controlled using the received receipt confirmation responses from the plurality of base station apparatuses. For this reason, by selecting an appropriate instruction command from the instruction commands of communication rates transmitted from the plurality of base station apparatuses and by performing communication rate control in accordance with the base station apparatus having a good uplink transmission quality, it is possible to reduce the interference of the entire system and improve the sector throughput.

The mobile station apparatus according to a fourth aspect of the present invention employs the configuration in the third aspect described above, wherein the selecting section comprises an ACK/NACK determining section for determining whether the most recently received receipt confirmation response for each base station apparatus is an ACK that indicates a successful receipt or a NACK that indicates an unsuccessful receipt; and an instruction command extracting section for extracting instruction commands transmitted from the base station apparatus in which the receipt confirmation response is an ACK as a result of the determination.

According to this configuration, an instruction command from the base station that transmitted an ACK as the most recent receipt confirmation response, is extracted, so that it is possible to select an instruction command, reflecting the most recent uplink transmission quality and implement appropriate command selection using a simple circuit configuration.

The mobile station apparatus according to a fifth aspect of the present invention employs the configuration in the third aspect described above, wherein the selecting section selects an instruction command having the highest priority level by using a receipt confirmation response received in the past.

According to this configuration, instruction commands from a base station apparatus that has stable and good transmission quality in the uplink over a long period of time can be selected because instruction commands are selected using receipt confirmation responses received in the past.

The mobile station apparatus according to a sixth aspect of the present invention employs the configuration in the fifth aspect described above, wherein the selecting section reflects in the selection of the instruction command a past receipt confirmation response in accordance with the maximum Doppler frequency.

According to this configuration, the interval of target receipt confirmation responses and the weight for past receipt confirmation responses can be determined with consideration given to the speed of fading fluctuations, and uplink transmission quality over a long period of time can be accurately reflected in the selection of instruction commands because past receipt confirmation responses are used in accordance with the maximum Doppler frequency.

The mobile station apparatus according to a seventh aspect of the present invention employs the configuration in the fifth aspect described above, wherein the selecting section comprises a buffer section for storing a history of received receipt confirmation responses for each base station apparatus; a numeric value converting section for converting received receipt confirmation responses into a numeric value to assign a score to each of the base station apparatuses; and an extracting section for extracting instruction commands transmitted from the base station apparatus having the highest score.

According to this configuration, in the history of the receipt confirmation responses of each base station apparatus, the ACK's and NACK's are converted to numeric values, a score is determined for each base station apparatus, and the instruction command transmitted from the base station apparatus having the highest score is extracted. For this reason, past receipt confirmation responses can be reliably reflected in the selection of instruction commands, and processing can be simplified by converting the ACK's and NACK's to a numeric value.

The mobile station apparatus according to an eighth aspect of the present invention employs the configuration in the seventh aspect described above, wherein the numeric value converting section comprises an ACK counting section for counting the number of ACK's in the receipt confirmation response within a prescribed interval to assign a score to each base station apparatus.

According to this configuration, a base station apparatus having a stable and good transmission quality in the uplink can be selected using a small amount of calculation because the number of ACK's within a prescribed interval is used as the score of each base station apparatus.

The mobile station apparatus according to a ninth aspect of the present invention employs the configuration in the seventh aspect described above, wherein the numeric value converting section comprises a points converting section for assigning points to receipt confirmation responses within a prescribed interval; and an arithmetic mean calculating section for calculating an arithmetic mean for each base station apparatus within a prescribed interval and assigning a score to each of the base station apparatuses.

According to this configuration, since the points of the receipt confirmation responses in a prescribed interval are added and averaged to obtain a score for each base station apparatus, the scores of each base station apparatus are merely compared even when the prescribed intervals are different for each base station apparatus, and a base station apparatus having a stable and good transmission quality in the uplink can be selected. Not only can a relative comparison be made between base station apparatuses, but an absolute reference can be provided to the uplink transmission quality by comparing the arithmetic mean and the prescribed threshold.

The mobile station apparatus according to a tenth aspect of the present invention employs the configuration in the seventh aspect described above, wherein the numeric value converting section comprises a weighting points converting section for weighting the score of each base station apparatus of the previous cycle, adding to the weighted score points assigned to newly received receipt confirmation responses to calculate the score for each of the base station apparatuses of the current cycle.

According to this configuration, the previous scores of each base station apparatus are weighted and the points of the new receipt confirmation responses are added to the weighted score to obtain the current score. Therefore, all past receipt confirmation responses can be given consideration, the uplink transmission quality can be compared, and instruction commands from a base station apparatus having good transmission quality in the uplink can be more reliably selected.

The mobile station apparatus according to an eleventh aspect of the present invention employs the configuration in the tenth aspect described above, wherein the weighting points converting section weights the score of each base station apparatus of the previous cycle in accordance with maximum Doppler frequency.

According to this configuration, the forgetting factor can be determined with consideration given to the speed of fading fluctuations, and uplink transmission quality over a long period of time can be accurately reflected in the selection of instruction commands because the previous score of each base station apparatus is weighted in accordance with the maximum Doppler frequency.

The mobile station apparatus according to a twelfth aspect of the present invention employs the configuration in the seventh aspect described above, wherein the numeric value converting section converts to different values the ACK corresponding to an initially transmitted signal and the ACK corresponding to a retransmitted signal.

According to this configuration, since different points are assigned to ACK's of initial transmission signals and to ACK's of retransmission signals, only ACK's of initial transmission signals may be counted as ACK's, low points may be assigned to ACK's of retransmission signals, or points may be assigned in another manner, and the uplink transmission quality can be evaluated in greater detail.

The mobile station apparatus according to a thirteenth aspect of the present invention employs the configuration in the third aspect described above, wherein the determining section, when a plurality of instruction commands have been selected, reduces the communication rate when at least one instruction command to reduce the communication rate has been selected, maintains the communication rate when at least one instruction command to maintain the communication rate has been selected and an instruction command to reduce the communication rate has not been selected, and increases the communication rate when only an instruction command to increase the communication rate has been selected.

According to this configuration, the communication rate of the base station apparatus having good transmission quality in the uplink can be controlled, the interference of the entire system can be reduced, and sector throughput can be improved because the communication rate is controlled in accordance with the instruction command that has the highest priority and that instructs the lowest communication rate from among the instruction commands received from a plurality of base station apparatuses.

The mobile station apparatus according to a fourteenth aspect of the present invention employs the configuration in the third aspect described above, wherein the determining section determines the communication rate to be the transmission rate when the transmission power corresponding to the communication rate that is in accordance with the selected instruction command is the maximum transmission power or less that can be transmitted from the mobile station apparatus, and determines the communication rate corresponding to the maximum transmission power to be the transmission rate when the transmission power corresponding to the communication rate is the maximum transmission power or more.

According to this configuration, this communication rate is adopted as the transmission rate only when the transmission power corresponding to the communication rate that is in accordance with the instruction command is the maximum transmission power or less. Therefore, control does not exceed the limit of the mobile station apparatus, and malfunctions and the like can be prevented.

The mobile station apparatus according to a fifteenth aspect of the present invention employs the configuration in the third aspect described above, wherein the determining section further comprises an acquisition section for acquiring the allowable transmission power in which transmissions from the mobile station apparatus are allowed on the basis of receiving power information that indicates the receiving power that can be received at each base station apparatus, the communication rate is determined to be the transmission rate when the transmission power corresponding to the communication rate that is in accordance with the selected instruction command is the allowable transmission power or less, and the communication rate corresponding to the allowable transmission power is determined to be the transmission rate when the transmission power corresponding to the communication rate is the allowable transmission power or more.

According to this configuration, this communication rate is adopted as the transmission rate only when the transmission power corresponding to the communication rate that is in accordance with the instruction command is the allowable transmission power or less. Therefore, the receiving power in the base station apparatus can be prevented from becoming excessive, and an increase in the interference in the entire system can be prevented.

The mobile station apparatus according to a sixteenth aspect of the present invention employs the configuration in the fifteenth aspect described above, wherein the acquiring section uses as allowable transmission power the transmission power corresponding to the minimum receiving power from among the receiving power that can be received at each base station apparatus.

According to this configuration, the allowable transmission power associated with the base station apparatus having the lowest amount of available receiving power is acquired. Therefore, signals canbe transmitted at a communication rate that corresponds to a transmission power that is equal to or less than the allowable transmission power, the power of this signal can be brought into a range that can be received in the base station apparatus, which is a communicating party for all apparatuses, and the interference of the entire system can be reliably prevented from increasing.

The base station apparatus according to a seventeenth aspect of the present invention comprises a receiving section for receiving signals transmitted from a mobile station apparatus; a generating section for generating instruction commands that instruct a communication rate to the mobile station apparatus on the basis of the received signal; a calculating section for calculating, based on the communication rate instructed to the mobile station apparatus, the receiving power that can be received at the base station apparatus; and a transmitting section for transmitting generated instruction commands and calculated receiving power.

According to this configuration, an excessive amount of receiving power in the base station apparatus can be prevent when the mobile station apparatus controls the communication rate in accordance with the instruction command. This is because the instruction command of the communication rate to the mobile station apparatus and the receivingpower that canbe received at the base station apparatus are acquired based on the signals received from a mobile station apparatus, and this information is transmitted to the mobile station apparatus.

The uplink communication rate control method according to an eighteenth aspect of the present invention comprises a step for receiving instruction commands that instruct an uplink communication rate, or receipt confirmation responses to signals of the uplink, which commands or responses have been transmitted from a plurality of base station apparatuses; and a step for determining the transmission rate to be used in actual transmissions on the basis of at least one option selected from the received receipt confirmation response and the instruction command.

According to this configuration, an instruction command of a receipt confirmation response or the communication rate for an uplink signal is received, and the communication rate is controlled based on at least one of them, so that, by determining the actual communication rate from the plurality of different instruction commands or by determining the actual communication rate by reflecting the receipt confirmation response, it is possible to consider the state of the uplink propagation path toward the base station apparatuses, thereby reducing the interference of the entire system and improving the sector throughput.

The uplink communication rate control method according to a nineteenth aspect of the present invention comprises a step for receiving instruction commands that instruct an uplink communication rate, and receipt confirmation responses to signals of the uplink, which commands and responses have been transmitted from a plurality of base station apparatuses; a step for selecting a base station apparatus having the highest priority among the plurality of base station apparatuses by using the received receipt confirmation responses; and a step for determining the transmission rate from the communication rate that is in accordance with the instruction command of the selected base station apparatus.

According to this method, the base station apparatus having the highest priority level among the base station apparatuses is selected and the communication rate is controlled using the received receipt confirmation responses from the plurality of base station apparatuses. For this reason, by selecting an appropriate instruction command from the instruction commands of communication rates transmitted from the plurality of base station apparatuses and performing control of the communication rate corresponding to the base station apparatus having a good uplink propagation environment, it is possible to reduce the interference of the entire system and improve sector throughput.

The present specification is based on Japanese Patent Application No. 2004-266025 filed on September 13, 2004, the entire content of which is incorporated herein by reference.

### Industrial Applicability

The mobile station apparatus and uplink communication rate control method of the present invention are useful for selecting an appropriate instruction command from a plurality of instruction commands of communication rates transmitted from a base station apparatus, reducing the interference of the entire system and improving sector throughput, and executing a soft handover during movement between cells, for example.

## Claims

1. A mobile station apparatus comprising:
a receiving section that receives receipt confirmation responses to uplink signals or instruction commands that instruct an uplink communication rate, the responses or commands being transmitted from a plurality of base station apparatuses; and
a control section that determines the transmission rate to be used in actual transmissions on the basis of at least one option selected from the instruction commands and the received receipt confirmation responses.

2. The mobile station apparatus according to claim 1, wherein the control section:
determines, as the transmission rate, the communication rate that is in accordance with the instruction command to reduce the communication rate when at least one instruction command instructing a communication rate reduction is received; and
determines, as the transmission rate, the communication rate in accordance with the instruction command of maintaining the communication rate when at least one instruction command instructing that the communication rate be maintained is received and an instruction command instructing a communication rate reduction is not received.

3. The mobile station apparatus according to claim 1, wherein the control section comprises:
a selecting section that selects a base station apparatus having a maximum priority level among the plurality of base station apparatuses by using the receipt confirmation response; and
a determining section that determines a transmission rate from a communication rate that is in accordance with the instruction command of the selected base station apparatus.

4. The mobile station apparatus according to claim 3, wherein the selecting section comprises:
an ACK/NACK determining section that determines whether the most recently received receipt confirmation response for each base station apparatus is an ACK that indicates a successful receipt or a NACK that indicates an unsuccessful receipt; and
an instruction command extracting section that extracts instruction commands transmitted from the base station apparatus in which the receipt confirmation response is an ACK as the determination result.

5. The mobile station apparatus according to claim 3, wherein the selecting section selects an instruction command having the highest priority level by using a receipt confirmation response received in the past.

6. The mobile station apparatus according to claim 5, wherein the selecting section reflects in the selection of the instruction command a past receipt confirmation response in accordance with the maximum Doppler frequency.

7. The mobile station apparatus according to claim 5, wherein the selecting section comprises:
a buffer section that stores a history of received receipt confirmation responses for each base station apparatus;
a numeric value converting section that converts received receipt confirmation responses into a numeric value to assign a score to each of the base station apparatuses; and
an extracting section that extracts instruction commands transmitted from the base station apparatus having the highest score.

8. The mobile station apparatus according to claim 7, wherein the numeric value converting section comprises an ACK counting section that counts the number of ACK's in the receipt confirmation response within a prescribed interval to assign a score to each base station apparatus.

9. The mobile station apparatus according to claim 7, wherein the numeric value converting section comprises:
a points converting section that assigns points to receipt confirmation responses within a prescribed interval; and
an arithmetic mean calculating section that calculates an arithmetic mean for each base station apparatus within a prescribed interval to assign a score to each of the base station apparatuses.

10. The mobile station apparatus according to claim 7, wherein the numeric value converting section comprises a weighting points converting section that weights the score of each base station apparatus of the previous cycle, and adds to the weighted score points assigned to newly received receipt confirmation responses to calculate the score for each of the base station apparatuses of the current cycle.

11. The mobile station apparatus according to claim 10, wherein the weighting points converting section weights the score of each base station apparatus of the previous cycle in accordance with maximum Doppler frequency.

12. The mobile station apparatus according to claim 7, wherein the numeric value converting section converts to different values the ACK corresponding to an initially transmitted signal and the ACK corresponding to a retransmitted signal.

13. The mobile station apparatus according to claim 3, wherein the determining section, when a plurality of instruction commands is selected:
reduces the communication rate when at least one instruction command to reduce the communication rate is selected;
maintains the communication rate when at least one instruction command to maintain the communication rate is selected and an instruction command to reduce the communication rate is not selected; and
increases the communication rate when only an instruction command to increase the communication rate is selected.

14. The mobile station apparatus according to claim 3, wherein the determining section:
determines the communication rate to be the transmission rate when the transmission power corresponding to the communication rate that is in accordance with the selected instruction command is the maximum transmission power or less that can be transmitted from the mobile station apparatus; and
determines the communication rate corresponding to the maximum transmission power to be the transmission rate when the transmission power corresponding to the communication rate is the maximum transmission power or more.

15. The mobile station apparatus according to claim 3, wherein:
the determining section further comprises an acquisition section that acquires the allowable transmission power in which transmissions from the mobile station apparatus are allowed on the basis of receiving power information that indicates the receiving power that can be received at each base station apparatus;
the communication rate is determined to be the transmission rate when the transmission power corresponding to the communication rate that is in accordance with the selected instruction command is the allowable transmission power or less; and
the communication rate corresponding to the allowable transmission power is determined to be the transmission rate when the transmission power corresponding to the communication rate is the allowable transmission power or more.

16. The mobile station apparatus according to claim 15, wherein the acquiring section uses as allowable transmission power the transmission power corresponding to the minimum receiving power from among the receiving power that can be received at each base station apparatus.

17. A base station apparatus comprising:
a receiving section that receives signals transmitted from a mobile station apparatus;
a generating section that generates instruction commands that instruct a communication rate to the mobile station apparatus on the basis of the received signal;
a calculating section that calculates, based on the communication rate instructed to the mobile station apparatus, the receiving power that can be received by the base station apparatus; and
a transmitting section that transmits generated instruction commands and calculated receiving power.

18. An uplink communication rate control method comprising:
a step of receiving instruction commands that instruct an uplink communication rate, or receipt confirmation responses to signals of the uplink, the commands or responses being transmitted from a plurality of base station apparatuses; and
a step of determining the transmission rate to be used in actual transmissions on the basis of at least one option selected from the received receipt confirmation response and the instruction command.

19. An uplink communication rate control method comprising:
a step of receiving instruction commands that instruct an uplink communication rate, and receipt confirmation responses to signals of the uplink, the commands or responses being transmitted from a plurality of base station apparatuses;
a step of selecting a base station apparatus having the highest priority among the plurality of base station apparatuses by using the received receipt confirmation responses; and
a step of determining the transmission rate from the communication rate that is in accordance with the instruction command of the selected base station apparatus.
